(19) Europäisches Patentamt / European Patent Office / Office européen des brevets

(11) **EP 4 321 545 A1**

(12) **EUROPEAN PATENT APPLICATION**
published in accordance with Art. 153(4) EPC

(43) Date of publication:
**14.02.2024 Bulletin 2024/07**

(21) Application number: **22784485.9**

(22) Date of filing: **18.03.2022**

(51) International Patent Classification (IPC):
**C08F 297/02** (2006.01)    **C08L 53/00** (2006.01)

(52) Cooperative Patent Classification (CPC):
**C08F 297/02; C08L 53/00**

(86) International application number:
**PCT/JP2022/012831**

(87) International publication number:
**WO 2022/215500 (13.10.2022 Gazette 2022/41)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **07.04.2021 JP 2021065181**

(71) Applicant: **Kuraray Co., Ltd.
Kurashiki-shi, Okayama 710-0801 (JP)**

(72) Inventors:
- **OKUMURA, Nao
  Tsukuba-shi, Ibaraki 305-0841 (JP)**
- **KAWAHARA, Moe
  Tsukuba-shi, Ibaraki 305-0841 (JP)**
- **ONO, Tomohiro
  Tsukuba-shi, Ibaraki 305-0841 (JP)**

(74) Representative: **Müller-Boré & Partner
Patentanwälte PartG mbB
Friedenheimer Brücke 21
80639 München (DE)**

(54) **RESIN COMPOSITION CONTAINING ACRYLIC BLOCK COPOLYMER**

(57)    To provide a resin composition containing an acrylic block copolymer capable of sufficiently inhibiting contamination by substances contained in sebum in particular by oleic acid, and maintaining flexibility.

A resin composition containing an acrylic block copolymer (I) and an acrylic block copolymer (II) at a specific proportion thereof, wherein the acrylic block copolymer (I) has at least one polymer block (A1) containing a methacrylic ester unit and at least one polymer block (B1) containing a specific acrylic ester unit and satisfies a specific requirement, and the acrylic block copolymer (II) has at least one polymer block (A2) containing a specific methacrylic ester unit and at least one polymer block (B2) containing a specific acrylic ester unit, and the acrylic block copolymer (II) satisfies a specific requirement.

**Description**

[Technical Field]

The present invention relates to a resin composition containing an acrylic block copolymer.

[Background Art]

Resin compositions containing acrylic block copolymers having a polymer block containing acrylic ester units and a polymer block containing methacrylic ester units, have been investigated for use in various applications such as adhesives and soft materials due to their characteristics. Among the aforementioned acrylic block copolymers, acrylic block copolymers containing acrylic ester units having an organic group with 1 to 3 carbon atoms in a polymer block containing the acrylic ester units, have excellent durability against plasticizers, and therefore they have been investigated for use in laminates with, for example, a vinyl chloride resin (see, for example, Patent Literature 1).

By the way, when a resin composition containing an acrylic block copolymer is used as, for example, an adhesive or soft material, it is sometimes used in environments where it comes in contact with skin such as hands. When using it in such an environment where it comes in contact with skin, the resin composition may be contaminated by sebum, which may cause lowering of the physical properties of the resin composition. Since oleic acid, one of the main substances constituting sebum, is a low molecular weight organic compound similar to a plasticizer used in vinyl chloride, the problem of contamination of the resin composition by sebum is expected to be solved by using the resin composition containing the acrylic block copolymer disclosed in Patent Literature 1.

[Citation List]

[Patent Literature]

[Patent Literature 1] WO2016/175119

[Summary of Invention]

[Technical Problem]

However, the acrylic block copolymer disclosed in Patent Literature 1 may have poor flexibility, and no resin composition that can maintain flexibility while avoiding contamination by substances such as oleic acid contained in sebum, has yet been found. An object of the present invention is to provide a resin composition containing an acrylic block copolymer capable of sufficiently inhibiting contamination by substances contained in sebum in particular by oleic acid and maintaining flexibility.

[Solution to Problem]

The present inventors have found, as a result of diligent investigation to achieve the aforementioned object, that a resin composition containing a specific acrylic block copolymer in which an acrylic ester unit having an organic group having 1 to 3 carbon atoms is contained in a polymer block containing the acrylic ester unit and a specific acrylic block copolymer in which an acrylic ester unit having an organic group having 4 to 12 carbon atoms is contained in a polymer block containing the acrylic ester unit, at a specific proportion thereof, can inhibit contamination by substances contained in sebum, in particular by oleic acid, and can maintain flexibility.

According to the present invention, the aforementioned object can be achieved by the following items:

[1] A resin composition comprising

100 parts by mass of an acrylic block copolymer (I) having at least one polymer block (A1) comprising a methacrylic ester unit and at least one polymer block (B1) comprising an acrylic ester unit, and
15 to 400 parts by mass of an acrylic block copolymer (II) having at least one polymer block (A2) comprising a methyl methacrylate unit and at least one polymer block (B2) comprising an acrylic ester unit,

wherein the content of the polymer block (A1) in the acrylic block copolymer (I) is 20% by mass or more,
the polymer block (B1) of the acrylic block copolymer (I) comprises a unit of an acrylic ester (b1-1) represented by the general formula $CH_2=CH-COOR^1$ (1), wherein $R^1$ represents an organic group having 1 to 3 carbon atoms, and
the acrylic block copolymer satisfies the following formulae (i) and (ii):

(i) (H) × SP (A1) + (J) × SP (B1) - SP (C) > 1.20
(ii) -0.80 ≤ SP (A1) - SP (B1) ≤ 0.43

wherein SP (A1) represents a solubility parameter $(cal/cm^3)^{1/2}$ of the polymer block (A1), SP (B1) represents a solubility parameter $(cal/cm^3)^{1/2}$ of the polymer block (B1), SP (C) represents a solubility parameter $(cal/cm^3)^{1/2}$ of oleic acid, (H) represents a mass proportion of the polymer block (A1) in the acrylic block copolymer (I), and (J) represents a mass proportion of the polymer block (B1) in the acrylic block copolymer (I),
the polymer block (B2) of the acrylic block copolymer (II) comprises a unit of an acrylic ester (b2-2) represented by the general formula $CH_2=CH\text{-}COOR^2$ (2), wherein $R^2$ represents an organic group having 4 to 12 carbon atoms, and the content of the polymer block (A2) in the acrylic block copolymer (II) is less than 35% by mass.

[2] The resin composition according to [1], wherein weight-average molecular weights of the acrylic block copolymers (I) and (II) are both in a range of 30,000 to 300,000.
[3] The resin composition according to [1] or [2], wherein, when a cylindrical test piece with a thickness of 1 mm and a diameter of 25 mm obtained by forming the resin composition is immersed in oleic acid and stored at 25°C for 168 hours, a rate of change in mass upon storage, [(mass of test piece after immersion) - (mass of test piece before immersion)]/(mass of test piece before immersion) × 100, is 200% or less.
[4] The resin composition according to any one of [1] to [3], wherein the acrylic ester (b2-2) unit in the acrylic block copolymer (II) is a n-butyl acrylate unit.
[5] The resin composition according to any one of [1] to [4], wherein the acrylic ester (b1-1) unit in the acrylic block copolymer (I) is a methyl acrylate unit.

[Advantageous Effects of Invention]

The resin composition of the present invention can sufficiently inhibit contamination by substances contained in sebum in particular by oleic acid and maintain its flexibility.

[Description of Embodiments]

The present invention will be described in detail below. Note that "(meth)acrylic ester" is a generic term for "methacrylic ester" and "acrylic ester," and "(meth)acrylic" is a generic term for "methacrylic" and "acrylic" as used herein.

<Acrylic block copolymer (I)>

The acrylic block copolymer (I) contained in the resin composition of the present invention has at least one polymer block (A1) containing a methacrylic ester unit and at least one polymer block (B1) containing an acrylic ester unit, and contains a unit of an acrylic ester (b1-1) represented by the general formula $CH_2=CH\text{-}COOR^1$ (1) wherein in formula (1), $R^1$ represents an organic group having 1 to 3 carbon atoms, as an acrylic ester unit contained in the polymer block (B1).
Examples of methacrylic esters that are constituent units of the aforementioned polymer block (A1) include, for example, alkyl methacrylates such as methyl methacrylate, ethyl methacrylate, propyl methacrylate, n-butyl methacrylate, t-butyl methacrylate, n-hexyl methacrylate, cyclohexyl methacrylate, 2-ethylhexyl methacrylate, n-octyl methacrylate, lauryl methacrylate, tridecyl methacrylate, stearyl methacrylate, and isobornyl methacrylate;

methacrylic esters without functional groups other than the alkyl methacrylate, such as phenyl methacrylate and benzyl methacrylate;
alkoxyalkyl methacrylates such as methoxyethyl methacrylate and ethoxyethyl methacrylate; and methacrylic esters having functional groups, such as diethylaminoethyl methacrylate, 2-hydroxyethyl methacrylate, 2-aminoethyl methacrylate, glycidyl methacrylate, and tetrahydrofurfuryl methacrylate.

Among them, the alkyl methacrylate is preferred, and methyl methacrylate, ethyl methacrylate, and propyl methacrylate are more preferred, with the methyl methacrylate being further preferred in terms of facilitation of economic availability and excellent durability and weather resistance of the resulting polymer block (A1), for example.
The methacrylic ester unit of the aforementioned polymer block (A1) may be obtained from one type of methacrylic ester singly or from two or more types of methacrylic esters. A proportion of the methacrylic ester units contained in the polymer block (A1) is preferably 60% by mass or more in the polymer block (A1), more preferably 80% by mass or more, and further preferably 90% by mass. The polymer block (A1) may also be composed of 100% by mass of methacrylic ester units, i.e., of methacrylic ester units singly.

The above polymer block (A1) may contain further monomer units to the extent that effects of the present invention are not impaired. Examples of such further monomer units include, for example, an acrylic ester; vinyl monomers having carboxyl groups such as (meth)acrylic acid, crotonic acid, maleic acid, maleic anhydride, and fumaric acid; vinyl monomers with functional groups, such as (meth)acrylamide, (meth)acrylonitrile, vinyl acetate, vinyl chloride, and vinylidene chloride; aromatic vinyl monomers, such as styrene, $\alpha$-methylstyrene, p-methylstyrene, and m-methylstyrene; conjugated diene monomers such as butadiene and isoprene; olefinic monomers, such as ethylene, propylene, isobutene, and octene; and lactone-based monomers such as $\varepsilon$-caprolactone and valerolactone. The monomer units composed of these further monomers are usually small in amount relative to the total monomer units of the polymer block (A1), and a proportion of the further monomer units contained in the polymer block (A1) is preferably 40% by mass or less, more preferably 20% by mass or less, and further preferably 10% by mass or less.

The glass transition temperature (Tg) of the aforementioned polymer block (A1) is preferably 50 to 150°C, more preferably 60 to 140°C, and further preferably 70 to 130°C. Within the aforementioned range of the glass transition temperature of the polymer block (A1), this polymer block (A1) acts as a physical pseudo-crosslinking point at a normal service temperature of the resin composition of the present invention, which allows cohesive force to be demonstrated in the above resin composition, resulting in excellent adhesive properties, durability, heat resistance, and excellent formability by thermal melting. Note that the glass transition temperature is a temperature at which the curve obtained by DSC measurement is extrapolated.

The aforementioned acrylic block copolymer (I) may contain two or more polymer blocks (A1), in which case methacrylic ester units and further monomers constituting those polymer blocks (A1) may be the same or different.

The weight-average molecular weight (Mw) of the polymer block (A1) is not particularly limited, but is preferably in a range of 1,000 to 50,000 and more preferably in a range of 4,000 to 20,000. The polymer block (A1) having a Mw of 1,000 or more facilitates to provide cohesive force of the resulting acrylic block copolymer (I). The polymer block (A1) having a Mw of 50,000 or less hardly renders too high a melt viscosity of the resulting acrylic block copolymer (I), which will be unlikely to result in any problem in productivity of the acrylic block copolymer (I) and formability of a resin composition containing the resulting acrylic block copolymer (I). It is noted that the weight-average molecular weight (Mw) used herein refers to a weight-average molecular weight in terms of standard polystyrenes, as measured by gel permeation chromatography (GPC) method.

The aforementioned polymer block (B1) contains an acrylic ester unit, and contains a unit of an acrylic ester (b1-1) represented by the general formula $CH_2=CH\text{-}COOR^1$ (1) wherein in formula (1), $R^1$ represents an organic group having 1 to 3 carbon atoms (hereinafter simply referred to as acrylic ester (b1-1)) as an acrylic ester unit contained in the polymer block (B1).

Examples of the acrylic esters (b1-1) include, for example, acrylic esters without functional groups, such as methyl acrylate, ethyl acrylate, isopropyl acrylate, and n-propyl acrylate; and acrylic esters with functional groups, such as 2-methoxyethyl acrylate, 2-hydroxyethyl acrylate, 2-aminoethyl acrylate, and glycidyl acrylate.

Among them, acrylic esters without functional groups are preferred from the viewpoint of increasing contamination resistance of the resulting resin composition against substances contained in sebum such as oleic acid, and methyl acrylate and ethyl acrylate are more preferred, and methyl acrylate is further preferred.

These acrylic esters (b1-1) may be used singly or two or more thereof may be combined for use.

The acrylic ester unit constituting the polymer block (B1) preferably contains, in addition to the aforementioned acrylic ester (b1-1) unit, a unit of an acrylic ester (b1-2) represented by the general formula $CH_2=CH\text{-}COOR^2$ (2) wherein in the formula, $R^2$ represents an organic group having 4 to 12 carbon atoms (hereinafter simply referred to as an acrylic ester (b1-2)).

Examples of acrylic esters (b1-2) include, for example, acrylic esters without functional groups, such as n-butyl acrylate, isobutyl acrylate, sec-butyl acrylate, tert-butyl acrylate, amyl acrylate, isoamyl acrylate, n-hexyl acrylate, 2-ethylhexyl acrylate, n-octyl acrylate, isooctyl acrylate, decyl acrylate, isobornyl acrylate, lauryl acrylate, cyclohexyl acrylate, phenyl acrylate, and benzyl acrylate; and acrylic esters with functional groups, such as 2-ethoxyethyl acrylate, 2-(diethylamino)ethyl acrylate, tetrahydrofurfuryl acrylate, and 2-phenoxyethyl acrylate.

Among them, acrylic esters without functional groups are preferred from the viewpoint that the polymer block (A1) and the polymer block (B1) more distinctly undergo phase separation, and the alkyl acrylate having an alkyl group having 4 to 12 carbon atoms is more preferred, and n-butyl acrylate and 2-ethylhexyl acrylate are further preferred. n-Butyl acrylate is further preferred in terms of increasing contamination resistance of the resulting resin composition to substances contained in sebum such as oleic acid, and in terms of excellent flexibility and adhesive properties (for example, tack and adhesive strength) of the resulting resin composition at low temperatures (-40 to 10°C) as well as excellent durability thereof.

These acrylic esters (b1-2) may be used singly or two or more thereof may be combined for use.

A mass ratio (b1-1)/(b1-2) of the acrylic ester (b1-1) unit to acrylic ester (b1-2) unit in the aforementioned polymer block (B1) is preferably 90/10 to 10/90. Within the aforementioned range of the mass ratio, excellent contamination resistance to substances contained in sebum such as oleic acid due to the acrylic ester (b1-1) unit and excellent flexibility due to the acrylic ester (b1-2) unit are both achieved. In terms of both of excellent contamination resistance to substances contained in sebum such as oleic acid and excellent flexibility achieved, the mass ratio (b1-1)/(b1-2) of the aforementioned acrylic esters is preferably 85/15 to 10/90, more preferably 80/20 to 10/90, and further preferably 80/20 to 20/80. Note that the mass ratio of the acrylic ester (b1-1) unit to the acrylic ester (b1-2) unit can be determined by $^1$H-NMR measurement.

A proportion of the acrylic ester (b1-1) units occupied in acrylic ester units of the aforementioned polymer block (B1) is preferably 90% by mass or less in the polymer block (B1), more preferably 85% by mass or less, and further preferably 80% by mass or less.

One preferred form of the acrylic ester unit contained in the polymer block (B1) is that it is composed only of acrylic ester (b1-1) units and acrylic ester (b1-2) units.

A proportion of acrylic ester units in the polymer block (B1) is preferably 60% by mass or more in the polymer block (B1), more preferably 80% by mass or more, and further preferably 90% by mass or more. Moreover, one preferred form of the polymer block (B1) is that it is composed only of 100% by mass of acrylic ester units, i.e., it is composed only of acrylic ester units.

The aforementioned polymer block (B1) may contain further monomer units other than acrylic ester units to the extent that the effects of the present invention are not impaired. Examples of further monomers constituting such units include, for example, methacrylic esters; vinyl monomers having carboxyl groups, such as (meth)acrylic acid, crotonic acid, maleic acid, maleic anhydride, and fumaric acid; vinyl monomers with functional groups, such as (meth)acrylamide, (meth)acrylonitrile, vinyl acetate, vinyl chloride, and vinylidene chloride; aromatic vinyl monomers, such as styrene, $\alpha$-methylstyrene, p-methylstyrene, and m-methylstyrene; conjugated diene monomers, such as butadiene and isoprene; olefinic monomers, such as ethylene, propylene, isobutene, and octene; and lactone-based monomers such as $\varepsilon$-caprolactone and valerolactone. The monomer units composed of these further monomers are usually small in amount relative to the total monomer units of the polymer block (B1), and a proportion of further monomer units contained in the polymer block (B1) is preferably 40% by mass or less, more preferably 20% by mass or less, and further preferably 10% by mass or less.

The aforementioned acrylic block copolymer (I) may contain two or more polymer blocks (B1), in which case combinations of acrylic ester units constituting those polymer blocks (B1) may be the same or different.

In a case in which an acrylic ester unit moiety contained in the aforementioned polymer block (B1) contains the acrylic ester (b1-1) unit and acrylic ester (b1-2) unit, the moiety is composed of a copolymer of the acrylic ester (b1-1) and acrylic ester (b1-2). In such a case, the copolymer may be in a form composed of a random copolymer, block copolymer, or graft copolymer of the acrylic ester (b1-1) and acrylic ester (b1-2), or may be composed of a tapered block copolymer thereof (gradient copolymer), but it is preferably a random copolymer. When two or more polymer blocks (B1) are contained in the above acrylic block copolymer (I), the structures of those polymer blocks (B1) may be the same or different.

The glass transition temperature (Tg) of the aforementioned polymer block (B1) is more preferably -50 to 55°C, more preferably -50 to 50°C, further preferably -50 to 45°C, and still further preferably -50 to 25°C. Within the range of the glass transition temperature, a resin composition with excellent flexibility and excellent durability at service temperatures is facilitated to be obtained.

A difference in glass transition temperature between the polymer block (A1) and the polymer block (B1) in the acrylic block copolymer (I) is preferably 50°C or higher and more preferably 70°C or higher.

The aforementioned acrylic block copolymer (I) is preferably the copolymer represented by the general formulae when the polymer block (A1) is "A1" and the polymer block (B1) is "B1":

$(A1-B1)_n$
$(A1-B1)_n-A1$
$A1-(A1-B1)_n$
$(A1-B1)_n-Z$
$(B1-A1)_n-Z$

wherein in the formula, n is an integer of 1 to 30, and Z represents a coupling site (a coupling site after a coupling agent reacts with a polymer end to form a chemical bond). The value of n above is also preferably 1 to 15, more preferably 1 to 8, and further preferably 1 to 4.

Among these structures, a structure in which the polymer block (A1) is bonded to both ends of the polymer block (B1), respectively, is preferred. Specifically, it is preferably the copolymer represented by the following general formula:

(A1-B1)$_n$-A1
(A1-B1)$_m$-Z

wherein in the formula, n is an integer of 1 to 30, m is an integer of 2 to 30, and Z represents a coupling site (a coupling site after a coupling agent reacts with a polymer end to form a chemical bond). The value of m above is preferably 2 to 15, more preferably 2 to 8, and further preferably 2 to 4. The value of n above is preferably 1 to 15, more preferably 1 to 8, and further preferably 1 to 4.

Among the aforementioned structures, linear block copolymers represented by (A1-B1)$_n$, (A1-B1)$_n$-A1, A1-(A1-B1)$_n$ are more preferred, and diblock copolymers represented by A1-B1 and triblock copolymers represented by A1-B1-A1 are further preferred, and the triblock copolymers represented by A1-B1-A1 are particularly preferred. These may be used singly or in combinations of two or more types thereof.

The content of polymer block (A1) in the aforementioned acrylic block copolymer (I) is 20% by mass or more and more preferably 20 to 40% by mass.

When the content of polymer block (A1) is 20% by mass or more, the acrylic block copolymer (I) facilitates to have a high cohesive force, and when a resin composition is produced from the acrylic block copolymer (I) and the acrylic block copolymer (II) described below, it tends to facilitate to maintain the shape and tends to have favorable formability. The content of polymer block (A1) being 40% by mass or less tends to result in a resin composition excellent in flexibility.

The content of polymer block (A1) in the acrylic block copolymer (I) is preferably 20 to 35% by mass and more preferably 25 to 31% by mass from the viewpoint of obtaining a resin composition excellent in flexibility.

In the acrylic block copolymer (I) of the present invention, the following formulae (i) and (ii) are required to be satisfied.

(i) (H) $\times$ SP (A1) + (J) $\times$ SP (B1) - SP (C) > 1.20
(ii) -0.80 $\leq$ SP (A1) - SP (B1) $\leq$ 0.43

In formulae (i) and (ii) above, the SP (A1) represents a solubility parameter (cal/cm$^3$)$^{1/2}$ of the polymer block (A1), the SP (B1) represents a solubility parameter (cal/cm$^3$)$^{1/2}$ of the polymer block (B1), the SP (C) represents a solubility parameter (cal/cm$^3$)$^{1/2}$ of oleic acid, and the (H) represents a mass proportion of the polymer block (A1) in the acrylic block copolymer (I), and the (J) represents a mass proportion of the polymer block (B1) in the acrylic block copolymer (I).

Here, the solubility parameters of each polymer block (A1) and (B1) are the values obtained by the Fedors estimation method. The solubility parameter (SP value ($\delta$)) is defined as a square root of the cohesive energy density ($\Delta E/V$) calculated from cohesive energy ($\Delta E$) and a molar molecular volume of a solvent (V). The SP values calculated from $\Delta Es$ and Vs of methyl polyacrylate (methyl acrylate unit), n-butyl polyacrylate (n-butyl acrylate unit), 2-ethylhexyl polyacrylate (2-ethylhexyl acrylate unit) and polymethyl methacrylate (methyl methacrylate unit) were 11.30 (cal/cm$^3$)$^{1/2}$, 10.20 (cal/cm$^3$)$^{1/2}$, 9.50 (cal/cm$^3$)$^{1/2}$ and 10.50 (cal/cm$^3$)$^{1/2}$, respectively. The SP (C) is also 9.14 (cal/cm$^3$)$^{1/2}$.

(Formula (i))

The value of (H) $\times$ SP (A1) + (J) $\times$ SP (B1) included in the left side of the formula (i) above is an index value for the solubility parameter of the entire acrylic block copolymer (I). It is important that the difference between this value and the solubility parameter SP (C) of oleic acid being within a specific range sufficiently inhibits contamination by substances contained in sebum and maintains flexibility.

Although the details of the reason therefore are unknown, it is presumed that the difference between the solubility parameter of the entire acrylic block copolymer and the solubility parameter of oleic acid exceeds a specific value, and thereby tends to enable to inhibit contamination by whole substances contained in sebum.

From the aforementioned viewpoint, the following formula (i-1) is preferably satisfied, and the following formula (i-2) is more preferably satisfied.

(i-1) (H) $\times$ SP (A1) + (J) $\times$ SP (B1) - SP (C) > 1.25
(i-2) (H) $\times$ SP (A1) + (J) $\times$ SP (B1) - SP (C) > 1.30

The acrylic block copolymer (I) satisfying formula (i) above can be obtained, for example, by adjusting a proportion of the acrylic ester (b1-1) units in the acrylic ester units of polymer block (B1) or the content of polymer block (A1).

(Formula (ii))

The value of SP (A1) - SP (B1) in formula (ii) above is a difference in solubility parameter between the polymer blocks (A1) and (B1) in the acrylic block copolymer (I), and formula (ii) indicates importance of this difference staying within a specific range.

Within the specific range of this difference in solubility parameter, not only sufficient flexibility but also sufficient contamination resistance to substances contained in sebum, such as oleic acid, can be demonstrated even when the acrylic block copolymer (I) is used in combination with the acrylic block copolymer (II), which will be described below.

Although the details of the reason for this are unknown, it is presumed that the difference in solubility parameter between the polymer blocks contained in the acrylic block copolymer (I) that is a specific value or less, inhibits phase separation of each polymer block, thereby making it difficult for sebum components to enter, and tends to enable to inhibit contamination by whole substances contained in sebum.

From the aforementioned viewpoint, the following formula (ii-1) is preferably satisfied, and the following formula (ii-2) is more preferably satisfied.

(ii-1) $-0.70 \leq SP (A1) - SP (B1) \leq 0.43$
(ii-2) $-0.65 \leq SP (A1) - SP (B1) \leq 0.43$

The acrylic block copolymer (I) satisfying formula (ii) above can be obtained, for example, by adjusting the content of a proportion of the acrylic ester (b1-1) units in the acrylic ester units of the polymer block (B1) or the content of polymer block (A1).

From the viewpoint of compatibility with the acrylic block copolymer (II) described below and processability of the resulting resin composition, the Mw of the aforementioned acrylic block copolymer (I) is preferably 30,000 to 300,000, more preferably 40,000 to 250,000, further preferably 50,000 to 220,000, and still further preferably 60,000 to 200,000. The Mw of the acrylic block copolymer (I) being 30,000 or more tends to increase the cohesive force of the acrylic block copolymer (I), rendering the resulting resin composition excellent in, for example, durability. Moreover, fabricating a formed body from the resin composition is less likely to cause any trouble such as bleeding derived from the acrylic block copolymer (I) on a surface of the formed body. The Mw of the acrylic block copolymer (I) being 300,000 or less tends to result in its excellent productivity and processability. Compatibility with the acrylic block copolymer (II) described below is also likely to be favorable, which tends to render superior transparency of the resulting resin composition, and tends to render more stable physical properties of a formed body fabricated from the resin composition.

The aforementioned acrylic block copolymer (I) preferably has a molecular weight distribution (Mw/Mn) of 1.0 to 1.5. The molecular weight distribution of the acrylic block copolymer (I) staying in the above range facilitates to increase the cohesive force of the acrylic block copolymer (I) and also tends to facilitate inhibition of mold contamination upon forming of the resulting pellets. From the above viewpoint, the molecular weight distribution is more preferably 1.0 to 1.4 and further preferably 1.0 and 1.3. Note that the Mn described above refers to a number-average molecular weight, and the number-average molecular weight (Mn) used herein refers to a number-average molecular weight in terms of standard polystyrenes, as measured by a gel permeation chromatography (GPC) method.

<Acrylic block copolymer (II)>

The acrylic block copolymer (II) contained in the resin composition of the present invention is a polymer different from the acrylic block copolymer (I) and has at least one polymer block (A2) containing a methyl methacrylate unit and at least one polymer block (B2) containing an acrylic ester unit, and the polymer block (B2) contains a unit of an acrylic ester (b2-2) represented by the general formula $CH_2=CH-COOR^2$ (2) wherein in formula (2), $R^2$ represents an organic group having 4 to 12 carbon atoms, and the content of polymer block (A2) in the acrylic block copolymer (II) is less than 35% by mass.

In addition to the acrylic block copolymer (I), the acrylic block copolymer (II) contained in the resin composition of the present invention enables not only contamination by substances contained in sebum in particular by oleic acid to be sufficiently inhibited, but also a resin composition with excellent flexibility to be obtained.

A proportion of methyl methacrylate units contained in the aforementioned polymer block (A2) is preferably 60% by mass or more in the polymer block (A2), more preferably 80% by mass or more, and further preferably 90% by mass or more. One preferred form of the polymer block (A2) is a form in which the polymer block (A2) is composed of 100% by mass of methyl methacrylate units, i.e., it is composed of methyl methacrylate units singly.

The aforementioned polymer block (A2) may contain further monomer units other than methyl methacrylate to the extent that the effects of the present invention are not impaired. Specific examples of such further monomers include, for example, methacrylic esters other than methyl methacrylate, acrylic esters; vinyl monomers having carboxyl groups, such as (meth)acrylic acid, crotonic acid, maleic acid, maleic anhydride, and fumaric acid; vinyl monomers having functional groups, such as (meth)acrylamide, (meth)acrylonitrile, vinyl acetate, vinyl chloride, and vinylidene chloride; aromatic vinyl monomers, such as styrene, $\alpha$-methylstyrene, p-methylstyrene, and m-methylstyrene; conjugated diene monomers, such as butadiene and isoprene; olefinic monomers, such as ethylene, propylene, isobutene, and octene;

and lactone-based monomers, such as ε-caprolactone and valerolactone. Monomer units composed of these further monomers are usually small in amount relative to the total monomer units of the polymer block (A2), and a proportion of further monomer units contained in the polymer block (A2) is preferably 40% by mass or less, more preferably 20% by mass or less, and further preferably 10% by mass or less.

The glass transition temperature (Tg) of the aforementioned polymer block (A2) is preferably 50 to 150°C, more preferably 70 to 140°C, and further preferably 80 to 130°C. The glass transition temperature of the polymer block (A2) falling within the above range tends to reduce agglutinability (agglutination resistance is improved) under elevated temperatures (for example, 50°C) upon the block being stored as pellets.

The aforementioned acrylic block copolymer (II) may contain two or more polymer blocks (A2), in which case methyl methacrylate units and further monomers constituting those polymer blocks (A2) may be the same or different.

A Mw of the polymer block (A2) is not particularly limited, but is preferably in a range of 1,000 to 50,000 and more preferably in a range of 4,000 to 20,000. The Mw of the polymer block (A2) being smaller than 1,000 may lose a cohesive force of the acrylic block copolymer (II) obtained. The Mw of the polymer block (A2) being larger than 50,000, may increase a melt viscosity of the resulting acrylic block copolymer (II) and may result in, for example, poor productivity of the acrylic block copolymer (II) and poor formability of pellets containing the resin composition obtained.

The aforementioned polymer block (B2) contains an acrylic ester unit and a unit of an acrylic ester (b2-2) represented by the general formula $CH_2=CH-COOR^2$ (2) wherein in the formula, $R^2$ represents an organic group having 4 to 12 carbon atoms (hereinafter simply referred to as an acrylic ester (b2-2)), as an acrylic ester unit contained in the polymer block (B2).

Specific examples of acrylic ester (b2-2) are the same as those of the acrylic ester (b1-2), which can be one type of constituent unit of the polymer block (B1) of the acrylic block copolymer (I).

Among these acrylic esters (b2-2), an acrylic ester without a functional group is preferred from the viewpoint of more distinct phase separation between the polymer block (A2) and the polymer block (B2), an alkyl acrylate with an alkyl group having 4 to 12 carbon atoms is more preferred, and n-butyl acrylate and 2-ethylhexyl acrylate are further preferred. n-Butyl acrylate is still further preferred because the resin composition of the present invention tends to be superior in flexibility and to facilitate a resin composition excellent in durability to be obtained.

The acrylic ester (b2-2) unit constituting acrylic ester units contained in the above polymer block (B2) may be obtained from one type of acrylic ester (b2-2) singly, or from two or more types of acrylic esters (b2-2).

A proportion of acrylic ester units contained in the polymer block (B2) is preferably 60% by mass or more in the polymer block (B2), more preferably 80% by mass or more, and further preferably 90% by mass or more. The polymer block (B2) may also be composed of 100% by mass of acrylic ester units, i.e., it is composed of acrylic ester units singly.

In one preferred form, the acrylic ester unit contained in the polymer block (B2) does not include a unit of an acrylic ester (b2-1) represented by the general formula $CH_2=CH-COOR^1$ (1) wherein in formula (1), $R^1$ represents an organic group having 1 to 3 carbon atoms (hereinafter simply referred to as an acrylic ester (b2-1)). Specific examples of the acrylic ester (b2-1) are the same as those of the acrylic ester (b1-1), which is a constituent unit of the polymer block (B1) of the acrylic block copolymer (I).

With the acrylic ester (b2-1) unit not contained in the polymer block (B2), a resin composition superior in flexibility can be obtained.

In one preferred form, the acrylic ester unit contained in the polymer block (B2) consists only of acrylic ester (b2-2) unit. The acrylic ester unit of the polymer block (B2) being composed only of acrylic ester (b2-2) unit, provides a resin composition superior in flexibility.

The aforementioned polymer block (B2) may contain further monomer units other than the acrylic ester unit to the extent that the effects of the present invention are not impaired. Specific examples of such further monomers are the same as those of further monomers that can be constituent units of the polymer block (B1) of the acrylic block copolymer (I). The monomer units composed of these further monomers are usually small in amount relative to the total monomer units of the polymer block (B2), and a proportion of the further monomer units contained in the polymer block (B2) is preferably 40% by mass or less, more preferably 20% by mass or less, and further preferably 10% by mass or less.

The glass transition temperature of the aforementioned polymer block (B2) is preferably -100 to 40°C, more preferably -80 to 35°C, and further preferably -70 to 30°C. The glass transition temperature of the polymer block (B2) staying within the above range results in being excellent in flexibility even in a lowered temperature region. In terms of the glass transition temperature of the polymer block (B2) falling within the aforementioned suitable range and facilitation of availability thereof, n-butyl acrylate, 2-ethylhexyl acrylate, and n-octyl acrylate are preferred among the aforementioned alkyl acrylates.

The aforementioned acrylic block copolymer (II) may also contains two or more polymer blocks (B2), in which case combinations of acrylic ester units constituting those polymer blocks (B2) may be the same or different.

A difference in glass transition temperature between the polymer block (A2) and the polymer block (B2) in the acrylic block copolymer (II) is preferably 70°C or higher and more preferably 100°C or higher.

When the polymer block (A2) is "A2" and the polymer block (B2) is "B2," the aforementioned acrylic block copolymer (II) is preferably represented by the general formulae:

(A2-B2)$_i$
(A2-B2)$_i$-A2
A2-(A2-B2)$_i$
(A2-B2)$_i$-Z
(B2-A2)$_i$-Z

wherein in the formula, i is an integer of 1 to 30 and Z represents a coupling site (coupling site after a coupling agent reacts with a polymer end to form a chemical bond). The value of i above is also preferably 1 to 15, more preferably 1 to 8, and further preferably 1 to 4.

Among these structures, a structure in which the polymer block (A2) is bonded to both ends of the polymer block (B2), respectively, is preferred. Specifically, the structure is preferably represented by the following general formulae:

(A2-B2)$_i$-A2
(A2-B2)$_k$-Z

wherein in the formula, i is an integer of 1 to 30, k is an integer of 2 to 30, and Z represents a coupling site (coupling site after a coupling agent reacts with a polymer end to form a chemical bond). The value of k above is preferably 2 to 15, more preferably 2 to 8, and further preferably 2 to 4. The value of i above is also preferably 1 to 15, more preferably from 1 to 8, and further preferably from 1 to 4.

Among the aforementioned structures, the linear block copolymers represented by (A2-B2)$_i$, (A2-B2)$_i$-A2, and A2-(A2-B2)-- are more preferred, and the diblock copolymers represented by A2-B2 and the triblock copolymers represented by A2-B2-A2 are further preferred, and the triblock copolymers represented by A2-B2-A2 are particularly preferred. They may be used singly or in combinations of two or more types thereof.

The content of polymer block (A2) in the aforementioned acrylic block copolymer (II) is less than 35% by mass. When the content of polymer block (A2) is less than 35% by mass, the acrylic block copolymer (II) becomes flexible, and the resin composition obtained by mixing with the acrylic block copolymer (I) is excellent in flexibility.

The content of polymer block (A2) in the acrylic block copolymer (II) is preferably less than 33% by mass and more preferably less than 32% by mass, because a resin composition excellent in flexibility is more facilitated to be obtained. From the viewpoint of inhibiting bleeding derived from the acrylic block copolymer (II), the content of polymer block (A2) is preferably 3% by mass or more.

From the viewpoint of compatibility with the acrylic block copolymer (I) and processability of the resulting resin composition, the Mw of the aforementioned acrylic block copolymer (II) is preferably 30,000 to 300,000, more preferably 30,000 to 200,000, further preferably 40,000 to 180,000, and still further preferably 50,000 to 160,000. The Mw of the acrylic block copolymer (II) being 30,000 or more increases the cohesive force of the acrylic block copolymer (II) and tends to allow the resulting resin composition to be superior in, for example, durability. Moreover, fabricating a formed body from the resin composition is less likely to cause any trouble such as bleeding derived from the acrylic block copolymer (II) on a surface of the formed body. The Mw of the acrylic block copolymer (II) being 300,000 or less, on the other hand, tends to result in a copolymer excellent in productivity and processability. Compatibility with the aforementioned acrylic block copolymer (I) is also likely to be favorable, transparency of the resulting resin composition tends to be superior, and the physical properties of a formed body fabricated from the resin composition tend to be more stable.

In the aforementioned acrylic block copolymer (II), a molecular weight distribution (Mw/Mn) thereof is preferably 1.0 to 1.5. Within the aforementioned range of the molecular weight distribution of the acrylic block copolymer (II), the cohesive force of the acrylic block copolymer (II) tends to be likely to be enhanced and apparatus contamination upon processing of the resin composition obtained is facilitated to be inhibited. From the above viewpoint, the molecular weight distribution is more preferably 1.0 to 1.4 and further preferably 1.0 to 1.3.

A MFR of the aforementioned acrylic block copolymer (II) under the conditions of 230°C and 3.8 kg load is preferably 20 g/10 minutes or more and more preferably 30 g/10 minutes or more. The MFR being the aforementioned lower limit value or more renders miscibility with the acrylic block copolymer (I) superior and tends to provide favorable compatibility and excellent transparency thereof. In the case of too high MFR, a melt viscosity is lowered, resulting in a likelihood of insufficient kneadability upon processing, and therefore the MFR is preferably 350 g/10 minutes or less and more preferably 300 g/10 minutes or less. The MFR being the above upper limit value or less tends to enable facilitation of melting and kneading.

Methods for producing the acrylic block copolymer (I) and acrylic block copolymer (II) are not particularly limited, and these acrylic block copolymers can be produced by production methods according to known methods. Generally, as a method for obtaining a block copolymer with a narrow molecular weight distribution, a method for polymerizing a monomer that is a constituent unit in living polymerization is employed. Examples of such living polymerization methods include, for example, a method undergoing living polymerization by using an organo rare earth metal complex as a polymerization initiator (see, for example, JPH11-335432A), a method undergoing living anionic polymerization by using an organo alkali metal compound as a polymerization initiator in the presence of a mineral acid salt such as an alkali metal or alkaline earth metal salt (see, for example, JPH7-25859B), a method undergoing living anionic polymerization by using an organo alkali metal compound as a polymerization initiator in the presence of an organoaluminum compound (see, for example, JPH6-93060A), and an atom transfer radical polymerization method (ATRP) (see, for example, Macromol. Chem. Phys., 2000, 201, p. 1108 to 1114).

Among the aforementioned production methods, the method undergoing living anionic polymerization in the presence of an organioaluminum compound produces a few homopolymers resulting in contaminations due to less deactivation during the course of polymerization, resulting in higher transparency of the resulting block copolymer. The polymerization conversion rate of monomer is also high and thereby renders a few remaining monomers in the block copolymer, which is able to inhibit bubbles from generating upon producing pellets containing the acrylic block copolymer. Furthermore, a molecular structure of the polymer block composed of alkyl methacrylic ester units becomes highly syndiotactic, which has an effect of increasing durability of a resin composition containing the resulting acrylic block copolymer. Then, the living anionic polymerization is possible under relatively mild temperature conditions, which thereby has an advantage of reducing an environmental burden (mainly electricity required for a refrigerator to control polymerization temperature) in the case of industrial production. In view of the above, the acrylic block copolymer is preferably produced by a method undergoing living anionic polymerization by using the organo alkali metal compound as a polymerization initiator in the presence of the organoaluminum compound.

As the method undergoing living anionic polymerization in the presence of the aforementioned organoaluminum compound, a method can be employed, for polymerizing a (meth)acrylic ester, in the presence of, for example, an organolithium compound, and the organoaluminum compound represented by the following general formula (3):

$$AlR^3R^4R^5 \qquad (3)$$

wherein in formula (3), $R^3$, $R^4$ and $R^5$ are each independently an alkyl group which may have a substituent, a cycloalkyl group which may have a substituent, an aryl group which may have a substituent, an aralkyl group which may have a substituent, an alkoxy group which may have a substituent, an aryloxy group which may have a substituent, or a N,N-disubstituted amino group, or $R^3$ is any of the groups described above, and $R^4$ and $R^5$ together form an arylenedioxy group which may have a substituent, by further adding in the reaction system, an ether compound, such as dimethyl ether, dimethoxyethane, diethoxyethane, or 12-crown-4; and a nitrogen-containing compound, such as triethylamine, N,N,N',N'-tetramethylethylenediamine, N,N,N',N'',N''-pentamethyldiethylenetriamine, 1,1,4,7,10,10-hexamethyltriethylenetetramine, pyridine, or 2,2'-dipyridyl, if necessary.

Examples of the aforementioned organolithium compounds include, for example, alkyl lithiums or alkyl dilithiums such as n-butyl lithium, sec-butyl lithium, and tetramethylenedilithium; aryl lithiums or aryl dilithiums such as phenyl lithium and xylyl lithium; aralkyl lithiums or aralkyl dilithiums such as benzyl lithium and dilithium formed by reaction of diisopropenylbenzene and butyl lithium; lithium amides such as lithium diisopropylamide, and lithium alkoxides such as methoxyl lithium.

Further, as the organoaluminum compounds represented by the general formula (3), for example, from the viewpoint of a high living polymerization property and facilitation of handling, isobutylbis(2,6-di-tert-butyl-4-methyl phenoxy)aluminum, isobutylbis(2,6-di-tert-butylphenoxy)aluminum, and isobutyl[2,2'-methylenebis(4-methyl-6-tert-butylphenoxy)] aluminum, for example, are preferred.

The resin composition of the present invention contains 15 to 400 parts by mass of the acrylic block copolymer (II) relative to 100 parts by mass of the acrylic block copolymer (I) .

In the resin composition of the present invention, the content of acrylic block copolymer (II) relative to 100 parts by mass of the acrylic block copolymer (I) being less than 15 parts by mass, results in insufficient flexibility of the resulting resin composition. The content of acrylic block copolymer (II) relative to 100 parts by mass of the acrylic block copolymer (I) exceeding 400 parts by mass, makes it difficult for the resulting resin composition to sufficiently inhibit contamination by substances contained in sebum.

From the viewpoint of further inhibiting contamination of the resulting resin composition by substances contained in sebum and obtaining a resin composition further excellent in flexibility, the content of acrylic block copolymer (II) relative to 100 parts by mass of the acrylic block copolymer (I) in the resin composition of the present invention is preferably 15 to 300 parts by mass and more preferably 20 to 200 parts by mass.

The total content of acrylic block copolymer (I) and acrylic block copolymer (II) contained in the resin composition of the present invention is preferably 80% by mass or more, more preferably 90% by mass or more, and further preferably 95% by mass or more, and may be 100% by mass.

The resin composition of the present invention may contain additives such as other polymers, tackifiers, softeners, plasticizers, heat stabilizers, light stabilizers, antistatic agents, flame retardants, foaming agents, coloring agents, dyes, refractive index modifiers, fillers, hardeners, lubricants, anti-agglutinative agent, repellents for ants, and countermeasures for pests, to the extent that the effects of the present invention are not impaired. One type of these other polymers and additives may be contained, or two or more thereof may be contained.

Examples of the aforementioned other polymers include, for example, acrylic resins such as a polymethyl methacrylate and (meth)acrylic ester polymer or copolymer; olefinic resins such as a polyethylene, ethylene-vinyl acetate copolymer, polypropylene, polybutene-1, poly-4-methylpentene-1 and polynorbornene; ethylenic ionomers; styrenic resins such as a polystyrene, styrene-maleic anhydride copolymer, high impact polystyrene, AS resin, ABS resin, AES resin, AAS resin, ACS resin, and MBS resin; styrene-methyl methacrylate copolymer; styrene-methyl methacrylate-maleic anhydride copolymer; polyester resins such as a polyethylene terephthalate, polybutylene terephthalate, and polylactic acid; polyamides such as nylon 6, nylon 66, and polyamide elastomers; polycarbonate; polyvinyl chloride; polyvinylidene chloride; polyvinyl alcohol; ethylene-vinyl alcohol copolymer; polyacetal; polyvinylidene difluoride; polyurethane; modified polyphenylene ether; polyphenylene sulfide; silicone rubber modified resin; acrylic rubber; silicone rubber; styrenic thermoplastic elastomers such as SEPS, SEBS, and SIS; olefinic rubbers such as IR, EPR, and EPDM. Among these, from the viewpoint of compatibility between the acrylic block copolymers (I) and (II) contained in the aforementioned resin composition, the polymethyl methacrylate, (meth)acrylic ester polymer or copolymer, ethylene-vinyl acetate copolymer, AS resin, styrene-methyl methacrylate-maleic anhydride copolymer, polylactic acid, polyvinylidene difluoride are preferred, and the polymethyl methacrylate, (meth)acrylic ester copolymer, styrene -methyl methacrylate-maleic anhydride copolymer are more preferred.

Examples of the (meth)acrylic ester polymer or copolymer include, for example, polymethyl acrylate, n-butyl polyacrylate, 2-ethylhexyl polyacrylate, random copolymer of methyl methacrylate and methyl acrylate, random copolymer of methyl methacrylate and n-butyl acrylate, diblock copolymer and triblock copolymer, composed of at least one polymer block composed of methacrylic ester units and at least one polymer block composed of acrylic ester units (however, the aforementioned diblock copolymer and triblock copolymer do not contain the acrylic block copolymer (I) and the acrylic block copolymer (II) of the present invention).

When the resin composition of the present invention contains a tackifier, pressure-sensitive adhesiveness (tackiness) can be imparted to a layer composed of the resin composition. Moreover, when the aforementioned resin composition is used as an adhesive, a tack, adhesive strength and retention power are facilitated to be adjusted. Examples of the aforementioned tackifier include, for example, natural resins such as a rosin-based resin and terpene-based resin; synthetic resins such as a petroleum resin, hydrogen-added (hereinafter may be referred to as "hydrogenated") petroleum resin, styrenic resin, coumarone-indene-based resin, phenolic resin and xylene-based resin. Further, when the tackifier is contained, the content thereof is, from the viewpoint of adhesive strength and durability, preferably 1 to 100 parts by mass, more preferably 3 to 70 parts by mass, further preferably 5 to 50 parts by mass, particularly preferably 5 to 40 parts by mass, and most preferably 5 to 35 parts by mass, relative to 100 parts by mass of the total of the aforementioned acrylic block copolymer (I) and the acrylic block copolymer (II).

Examples of the aforementioned rosin-based resin include, for example, rosins such as gum rosin, tall oil rosin, and wood rosin; modified rosins such as hydrogenated rosin, disproportionated rosin, and polymerized rosin; and rosin esters such as glycerine esters of these rosin and modified rosin, and pentaerythritol esters. Specific examples of the aforementioned rosins include Pinecrystal KE-100, Pinecrystal KE-311, Pinecrystal KE-359, Pinecrystal KE-604, and Pinecrystal D-6250 (all manufactured by Arakawa Chemical Industries, Ltd.).

Examples of the aforementioned terpene-based resins include, for example, terpene resins mainly composed of $\alpha$-pinene, $\beta$-pinene, and dipentene, aromatic modified terpene resins, hydrogenated terpene resins, and terpene phenol resins. Specific examples of the aforementioned terpene-based resins include Tamanol 901 (manufactured by Arakawa Chemical Industries, Ltd.). Examples of the aforementioned (hydrogenated) petroleum resins include, for example, (hydrogenated) aliphatic ($C_5$-based) petroleum resins, (hydrogenated) aromatic ($C_9$-based) petroleum resins, (hydrogenated) copolymer-based ($C_5/C_9$-based) petroleum resins, (hydrogenated) dicyclopentadiene-based petroleum resins, and alicyclic saturated hydrocarbon resins. Examples of the aforementioned styrenic resins include, for example, a poly $\alpha$-methylstyrene, $\alpha$-methylstyrene/styrene copolymer, styrenic monomer/aliphatic monomer copolymer, styrenic monomer/$\alpha$-methyl styrene/aliphatic monomer copolymer, styrenic monomer copolymer, and styrenic monomer/aromatic monomer copolymer. Specific examples of the styrenic resins include FTR6000 series and FTR7000 series (manufactured by Mitsui Chemicals, Inc.).

Among the aforementioned tackifiers, the rosin-based resin, terpene-based resin, (hydrogenated) petroleum resin and styrenic resin are preferable in terms of exhibiting high adhesive strength, and of these, the rosin-based resin is preferable from the viewpoint of improving adhesiveness, and disproportionated or hydrogenated rosins that underwent purification treatment by operations such as distillation, recrystallization, and extraction are more preferable from the viewpoint of inhibiting deterioration in light resistance, coloration, and generation of bubbles due to impurities. These may be used singly or in combinations of two or more thereof. Further, the softening point of the aforementioned tackifier is preferably 50 to 150°C from the viewpoint of exhibiting high adhesive strength.

Examples of the aforementioned plasticizers include, for example, phthalates such as dibutyl phthalate, di-n-octyl phthalate, di-2-ethylhexyl phthalate, di-n-decyl phthalate and diisodecyl phthalate, sebacates such as di-2-ethylhexyl sebacate and di-n-butyl sebacate, azelaic acid esters such as azelaic acid di-2-ethylhexyl ester, fatty acid esters such as adipate esters such as di-2-ethylhexyl adipate and di-n-octyl adipate; paraffins such as chlorinated paraffin; glycols such as polypropylene glycol; epoxy-based polymer plasticizers such as epoxidized soybean oil and epoxidized linseed oil; phosphates such as trioctyl phosphate and triphenyl phosphate; phosphites such as triphenyl phosphite; acrylic oligomers such as n-butyl poly(meth)acrylate and 2-ethylhexyl poly(meth)acrylate; polybutene; polyisobutylene; polyisoprene; process oil; and naphthene-based oil, and these may be used singly or in combinations of two or more thereof.

Examples of the aforementioned fillers include, for example, inorganic fibers and organic fibers such as glass fibers and carbon fibers; inorganic fillers such as calcium carbonate, talc, carbon black, titanium oxide, silica, clay, barium sulfate, and magnesium carbonate. The inorganic fibers and organic fibers contained impart durability to the resulting resin composition. The inorganic filler contained imparts heat resistance and weather resistance to the resulting resin composition.

Moreover, the titanium oxide contained facilitates light shielding properties to be imparted to the resulting resin composition. The amount of titanium oxide added in the resin composition is preferably 20 to 250 parts by mass and more preferably 30 to 150 parts by mass, relative to 100 parts by mass of the total of the acrylic block copolymer (I) and the acrylic block copolymer (II).

In a case in which the resin composition of the present invention is used together with a curing agent, it can be suitably used as a layer composed of a UV-curable resin composition. Moreover, it can be suitably used as a UV-curing adhesive. Examples of the aforementioned curing agent include, for example, photocuring agents such as UV curing agents and heat curing agents, and include, for example, benzoins, benzoin ethers, benzophenones, anthraquinones, benzils, acetophenones, and diacetyls. Specific examples thereof include, for example, benzoin, α-methylolbenzoin, α-t-butylbenzoin, benzoin methyl ether, benzoin ethyl ether, benzoin-n-propyl ether, benzoin isopropyl ether, benzoin isobutyl ether, α-methylolbenzoin methyl ether, α-methoxybenzoin methyl ether, benzoin phenyl ether, benzophenone, 9,10-anthraquinone, 2-ethyl-9,10-anthraquinone, benzyl, 2,2-dimethoxy-1,2-diphenylethan-1-one (2,2-dimethoxy-2-phenylacetophenone), and diacetyl. The curing agents may be used singly or in combinations of two or more thereof. In order to enhance the effect of these curing agents, for example, monomers such as (meth)acrylic acid, (meth)acrylate, (meth)acrylamide, (meth)acrylamide derivatives, vinyl esters, vinyl ethers, styrene derivatives; and oligomers containing the aforementioned monomers as constituents, may be further added. In addition to these monomers, a crosslinking agent composed of a bifunctional or higher monomer or oligomer may be added.

The resin composition of the present invention contains the acrylic block copolymer (I) and the acrylic block copolymer (II), and therefore it has excellent weather resistance, and containing an antioxidant, ultraviolet absorber, and light stabilizer therein, enables even higher weather resistance to be exhibited.

Examples of the antioxidants include, for example, phenolic antioxidants and phosphorus antioxidants. Examples of the ultraviolet absorbers include, for example, benzotriazole-based ultraviolet absorbers. Examples of the light stabilizers include, for example, hindered amine-based light stabilizers.

They may be contained singly or in combinations of two or more thereof in the resin composition of the present invention. Among them, one preferred aspect is such that all of the antioxidant, ultraviolet absorber, and light stabilizer are contained in a formed body.

The amount of each added in the resin composition of the present invention is preferably 0.01 to 1.0 parts by mass and more preferably 0.03 to 0.60 parts by mass, relative to 100 parts by mass of the total of the acrylic block copolymer (I) and acrylic block copolymer (II).

A method for producing the resin composition of the present invention is not particularly limited, and for example, can be produced by mixing each component at a temperature within a range of 100 to 300°C and using pieces of known mixing or kneading apparatus such as a kneader ruder, extruders such as a twin-screw extruder, mixing rolls, and Banbury mixer. Moreover, the resin composition of the present invention may be produced by dissolving and mixing each component in an organic solvent and then distilling off the organic solvent. The resulting composition can be stacked with a layer composed of a resin composition containing the plasticizer which will be described later, after being melted by heat. Moreover, the obtained resin composition can be used, for example, as a hot-melt adhesive by heating and melting it.

When dissolving and mixing each component for the resin composition of the present invention in an organic solvent and then distilling off the organic solvent to produce the resin composition, a layer composed of a resin composition containing a plasticizer may be coated with the aforementioned resin composition prior to distilling off the organic solvent, and then the organic solvent can be distilled off to stack the resulting layer on the layer composed of the resin composition. Moreover, in the case of using the aforementioned resin composition as an adhesive, when dissolving and mixing each component in an organic solvent and then distilling off the organic solvent to produce an adhesive, it is possible to be used as the adhesive by coating an adherend with the resulting resin composition prior to distilling off the organic solvent, and then distilling off that organic solvent to undergo heat-sensitive adhesion. Note that when the resin composition of the present invention is used by heating and melting it, the melt viscosity is preferably low from the viewpoint of processability and handleability, and for example, when undergoing heat melt coating, the melt viscosity around 200°C is preferably 50,000 mPa·s or less and more preferably 30,000 mPa·s or less.

Moreover, in a case in which, in addition to the acrylic block copolymer (I) and the acrylic block copolymer (II), components such as other polymers or additives added as necessary, are contained as raw materials for the resin composition of the present invention, a method for melting and mixing these raw materials by using once, for example, the aforementioned apparatus, is recommended in order to enhance dispersibility of each component contained in the raw materials. In particular, from the viewpoints of improving kneadability and compatibility between the acrylic block copolymer (I) and the acrylic block copolymer (II) contained in the resin composition of the present invention, and the components added as necessary, a twin-screw extruder is preferably used. A temperature upon mixing may be appropriately adjusted depending on the acrylic block copolymer (I) and acrylic block copolymer (II) and components added as necessary, and they may be usually mixed at a temperature within a range of 110°C to 300°C.

The resin composition of the present invention thus obtained enables forming at sufficiently low temperatures and heat-sensitive adhesion processing or hot-melt coating processing at sufficiently low temperatures, and enables the processing at a temperature of preferably 180°C or lower and more preferably at 150 to 180°C.

Regarding the resin composition of the present invention, when a cylindrical test piece with a thickness of 1 mm and a diameter of 25 mm obtained by forming the resin composition is immersed in oleic acid and stored at 25°C for 168 hours, the rate of change in mass upon storage, [(mass of test piece after immersion) - (mass of test piece before immersion)]/(mass of test piece before immersion) × 100, is preferably 200% or less.

The resin composition having such characteristics has been able to more sufficiently inhibit contamination by substances contained in sebum, particularly by oleic acid. From this viewpoint, the aforementioned rate of change in mass is preferably 180% or less and further preferably 160% or less.

The resin composition of the present invention can be used as a formed body by undergoing forming processing by a method commonly used. Examples of the forming processing methods include, for example, melt forming processing methods undergoing heating and melting, such as extrusion forming, injection forming, compression forming, blow forming, calendering, and vacuum forming, and solution casting methods. Among these forming methods, the melt forming processing method is preferable from the viewpoint of handleability of the resin composition of the present invention, for example. By this forming method, formed bodies in arbitrary shapes, such as molded articles, pipes, sheets, films, fibrous articles, and laminates having layers composed of a resin composition containing the acrylic block copolymer (I) and the acrylic block copolymer (II), are obtained.

The hardness of the aforementioned formed body is preferably 7.5 to 75, more preferably 8 to 65, and further preferably 10 to 60, from the viewpoint of physical properties and flexibility as a formed body.

When the aforementioned formed body is a monolayer body, a raw material of the aforementioned formed body (for example, pellets composed of the resin composition of the present invention) is extrusion formed or injection formed to be able to produce a monolayer body containing the resin composition of the present invention. Examples of methods of extrusion forming include, for example, a T-die method, and inflation method, and the T-die method is preferred among them. By the extrusion forming, a monolayer body can be fabricated without using a solvent, and can be fabricated with relatively simple manufacturing equipment. Fabrication of a monolayer body by extrusion forming enables the production process to be simplified and enables production cost of the monolayer body to be reduced.

According to the T-die method, a monolayer body can be fabricated, for example, by heating and melting the resin composition of the present invention (for example, pellets composed of the resin composition of the present invention), which is the raw material of the aforementioned formed body, and extruding it from a T-die.

In a case in which the formed body obtained from the resin composition of the present invention is a laminate, the resin composition of the present invention (for example, pellets of the resin composition of the present invention), which is the raw material of the aforementioned formed body, is extrusion formed into a substrate layer to be able to produce a laminate having a polymer layer containing the acrylic block copolymer (I) and acrylic block copolymer (II) and the substrate layer. Examples of the extrusion forming methods include, for example, a T-die method and inflation method, among which the T-die method is more suitable. By the extrusion forming, a laminate can be fabricated without using a solvent and can be fabricated with relatively simple manufacturing equipment. Fabrication of a laminate by extrusion forming enables the production process to be simplified, which can also reduce production cost of the laminate.

According to the extrusion lamination processing method, which is an example of the T-die method, for example, the resin composition of the present invention (for example, pellets of the resin composition of the present invention), which is the raw material of the aforementioned formed body, is heated and melted and extruded from a T-die onto a substrate layer, and the polymer layer is laminated on the substrate layer then to be able to fabricate a laminate containing a layer containing the resin composition of the present invention and the substrate layer. Moreover, according to a co-extrusion forming processing method, which is another example of the T-die method, for example, both of a raw material for a layer containing the aforementioned resin composition and a raw material of a substrate layer are heated and melted, and simultaneously extrusion formed to be able to fabricate a laminate containing the layer containing the resin composition of the present invention and the substrate layer.

In the extrusion lamination processing method, the resin composition of the present invention is preferably extruded from a die at a temperature of 140 to 260°C in order to obtain favorable adhesiveness with a substrate layer.

Moreover, examples of the aforementioned substrate layer include, for example, films and sheets of synthetic polymer compounds, metal foils, papers, cellophane, nonwoven fabrics, and woven fabrics. Examples of the synthetic polymer compounds include, for example, a polyethylene terephthalate, polyethylene naphthalate, triacetyl cellulose, polyamide, polyvinyl alcohol, polycarbonate, cycloolefin-based resin, styrene-methyl methacrylate copolymer, polyvinyl chloride, ethylene-vinyl acetate copolymer, polymethyl methacrylate, polyethylene, polypropylene, and mixtures of two or more types of these polymers, but are not limited thereto. Note that the synthetic polymer compound may be a copolymer obtained by copolymerizing various monomers. These films and sheets may be vapor-deposited with aluminum, alumina, or silicon dioxide. Moreover, the films and sheets of these synthetic polymer compounds may be further printed with, for example, urethane ink.

Examples of the metal foils include, for example, an aluminum foil and copper foil, and examples of papers include, for example, kraft paper, high-quality paper, and glassine paper. Examples of the nonwoven fabrics include nonwoven fabrics composed of, for example, aramid fibers, glass fibers, cellulose fibers, nylon fibers, vinylon fibers, polyester fibers, polyolefin fibers, and rayon fibers. Examples of the woven fabrics include woven fabrics composed of, for example, aramid fibers, glass fibers, cellulose fibers, nylon fibers, vinylon fibers, polyester fibers, polyolefin fibers, and rayon fibers.

Examples of configuration of the aforementioned laminate includes, for example, a two-layer configuration of a layer containing the resin composition of the present invention and a substrate layer, a three-layer configuration of two substrate layers and a layer containing the resin composition of the present invention (substrate layer/resin composition layer/substrate layer), a four-layer configuration of a substrate layer, different two layers of a resin composition layer (a) and a resin composition layer (b), containing the resin compositions of the present invention, and a substrate layer (substrate layer/resin composition layer (a)/resin composition layer (b)/substrate layer), a four-layer configuration of a substrate layer, a layer (a) containing the resin composition of the present invention, a layer (c) containing the resin composition of the present invention, and a substrate layer (substrate layer/resin composition layer (a)/resin composition layer (c)/substrate layer), and a five-layer configuration of three layers of substrate layers and two layers of layers containing the resin compositions of the present invention (substrate layer/resin composition layer/substrate layer/resin composition layer/substrate layer), but are not limited thereto.

A thickness ratio of the substrate layer and the layer containing the resin composition of the present invention, in the aforementioned laminate is not particularly limited, but is preferably in a range of substrate layer/resin composition layer=1/1,000 to 1,000/1, more preferably in a range of 1/200 to 200/1, from the viewpoint of durability and handleability of the resulting laminate.

An adhesive surface of the substrate layer, which is in contact with a layer containing the resin composition of the present invention, may be oxidized with air or an ozone gas. Moreover, in order to enhance adhesiveness with the aforementioned resin composition layer, an adhesive surface of the substrate layer may be subjected to known surface treatment such as anchor coating agent treatment, corona discharge treatment, flame treatment, and plasma treatment. Moreover, an anchor layer may be formed on a surface of at least one of the aforementioned resin composition layer and the substrate layer by using, for example, a resin with adhesiveness.

Examples of resins used for such anchor layers include, for example, an ethylene-vinyl acetate copolymer, ethylene-methyl methacrylate copolymer, ionomer, block copolymers (for example, styrenic triblock copolymers such as SIS and SBS and diblock copolymers), ethylene-acrylic acid copolymer, and ethylene-methacrylic acid copolymer. The aforementioned anchor layer may be one layer, or two or more layers.

Methods for forming the anchor layer are not particularly limited and include, for example, a method for forming the anchor layer by coating a substrate layer with solution containing the aforementioned resin, and a method for heating and melting a composition containing, for example, the aforementioned resin, which will be an anchor layer to form the anchor layer on a surface of a substrate layer by using, for example, a T-die.

The co-extrusion forming processing method that is an example of the T-die method, may be either a feed block method or a multi-manifold method, which enables forming of multilayers and fabrication of, for example, a laminate of two layers with two types, composed of a substrate layer and a layer containing the resin composition of the present invention, and a laminate of three layers with three types having an intermediate layer between the substrate layer and the aforementioned resin composition layer.

Examples of materials for the substrate layer in the co-extrusion forming processing method include various synthetic polymer compounds, and suitable examples of the synthetic polymer compounds include, for example, a polyolefin.

Examples of polyolefinic materials include, for example, a low density polyethylene, medium density polyethylene, high density polyethylene, linear low density polyethylene, ethylene-$\alpha$-olefin copolymer, ethylene-vinyl acetate copolymer, ethylene-ethyl acrylate copolymer, ethylene-methyl methacrylate copolymer, ethylene-n-butyl acrylate copolymer, and polypropylenes (homopolymer, random copolymer, and block copolymer). These polyolefinic materials may be used singly, or may be used as a mixture or composition in arbitrary combinations thereof. In particular, a polypropylene of block copolymer is preferred as a material for a substrate layer.

Moreover, to the substrate layer may be compounded additives such as pigments, anti-aging agents, stabilizers, and ultraviolet absorbers, as necessary. Furthermore, in the aforementioned laminate, the substrate layer is not limited to a single layer, and may have a plurality of substrate layers. The total thickness of a substrate layer composed of a single layer or a plurality of layers is preferably, for example, 20 $\mu$m or thicker and 100 $\mu$m or thinner.

Further, the aforementioned laminate may also have an intermediate layer. Resins that can be used as the intermediate layer include, for example, an ethylene-vinyl acetate copolymer, ethylene-methyl methacrylate copolymer, ionomer, block copolymers (for example, styrenic triblock copolymers such as SIS and SBS and di- block copolymers), ethylene-acrylic acid copolymer, and ethylene-methacrylic acid copolymer. The aforementioned intermediate layer may be a single layer or two or more layers, and can be formed by simultaneously subjecting a substrate layer and a layer containing the resin composition of the present invention to co-extrusion forming.

In a case in which the formed body obtained from the resin composition of the present invention is a multilayer body such as a molded article or a sheet, the resin composition of the present invention (for example, pellets of the resin composition of the present invention) is injection-formed then to be able to produce a multilayer body having a layer (Z) containing the resin composition of the present invention and a polymer layer (Y) composed of other materials other than the resin composition of the present invention. Examples of methods of injection forming include, for example, two-color forming and insert forming.

Examples of polymers constituting the polymer layer (Y) composed of other materials other than the resin composition of the present invention (hereinafter also referred to as layer (Y)) include, for example, acrylic resins such as a polymethyl methacrylate and (meth)acrylic ester copolymer; olefinic resins such as a polyethylene, ethylene-vinyl acetate copolymer, polypropylene, polybutene-1, poly-4-methylpentene-1, and polynorbornene; ethylenic ionomer; styrenic resins such as polystyrene, styrene-maleic anhydride copolymer, high impact polystyrene, AS resin, ABS resin, AES resin, AAS resin, ACS resin, and MBS resin; styrene-methyl methacrylate copolymer; polyester resins such as a polyethylene terephthalate, amorphous polyethylene terephthalate (PET-G), polybutylene terephthalate, and polylactic acid; polyamides such as nylon 6, nylon 66, and polyamide elastomer; polycarbonate; polyvinyl chloride; polyvinylidene chloride; polyvinyl alcohol; ethylene-vinyl alcohol copolymer; polyacetal; polyvinylidene difluoride; polyurethane; modified polyphenylene ether; polyphenylene sulfide; silicone rubber modified resin; acrylic rubber; silicone-based rubber; styrenic thermoplastic elastomers such as SEPS, SEBS, and SIS; and olefinic rubbers such as IR, EPR, and EPDM. Note that this multilayer body may have other layers in addition to the layer (Z) containing the resin composition of the present invention (hereinafter also referred to as a layer (Z)) and the layer (Y).

Examples of the aforementioned layer (Y) include, for example, a layer (YI) containing a polar resin. Examples of the aforementioned polar resins include, for example, acrylic resins such as a polymethyl methacrylate and (meth)acrylic ester copolymer; styrenic resins such as a polystyrene, styrene-maleic anhydride copolymer, high-impact polystyrene, AS resin, ABS resin, AES resin, AAS resin, ACS resin, and MBS resin; styrene-methyl methacrylate copolymer; polyester resins such as a polyethylene terephthalate, amorphous polyethylene terephthalate (PET-G), polybutylene terephthalate, and polylactic acid; polyamides such as nylon 6, nylon 66, and polyamide elastomer; polycarbonate; polyvinyl chloride; polyvinylidene chloride; polyvinyl alcohol; ethylene-vinyl alcohol copolymer; polyacetal; polyvinylidene difluoride; polyurethane; modified polyphenylene ether; polyphenylene sulfide; silicone rubber modified resin; acrylic rubber; and silicone-based rubber.

In the aforementioned multilayers, the layer (Z) and layer (YI) are preferably adjacent to each other. The above multilayer body has the layer (Z) excellent in low tack, transparency, flexibility, and shock absorption properties. Even when a polar resin with high stiffness is used for the layer (YI) containing a polar resin, the layer (YI) can possess both excellent flexibility and shock absorption properties.

Thicknesses of the layer (Z) and layer (Y) constituting a multilayer body are not particularly limited, but from the viewpoint that a formed body has excellent flexibility and shock absorption properties, the thickness of layer (Z) is preferably 0.1 to 10 mm, more preferably 0.3 to 5 mm, further preferably 0.5 to 3 mm, and it may be 0.7 to 2 mm and further 1 to 1.5 mm. The thickness of layer (Y) is also preferably 0.3 to 10 mm, or more preferably 0.5 to 5 mm, and further preferably 1 to 3 mm.

Specific examples of methods for producing the aforementioned multilayer body include, for example, a method for separately forming a layer (Z) and layer (Y) in advance and stacking them (Method 1); a method for distributing the pellets of the present invention in a molten state in layer (Y) that has preliminarily been produced to form a layer (Z) (Method 2); and a method for distributing a polymer in a molten state in a layer (Z) that has preliminarily been produced to form a layer (Y) (Method 3). Among these methods, the Methods 2 and 3 are preferred because of, for example, improved adhesive strengths between the layer (Z) and layer (Y), and the Method 2 is more preferred because, for example, a desired formed body can be facilitated to be obtained. Moreover, since the resin composition of the present invention (typically pellets of the resin composition of the present invention) has excellent melt flowability, the layer (Z) is preferably formed by injection forming, and in particular, insert forming in which a layer (Y) preliminarily formed is arranged in a mold, and the resin composition of the present invention in a molten state is injected, is more preferably employed.

Applications of the resin composition of the present invention and the formed bodies obtained from the resin composition are not particularly limited, and can be utilized in a wide range of applications such as an optical field, food field, medical field, consumer field, automotive field, electrical/electronic field, and architectural field because the formed bodies have excellent heat resistance, transparency, flexibility, and appearance of the formed bodies.

Examples of shapes of the formed body obtained from the resin composition include, for example, various shapes such as pellets, sheets, plates, pipes, tubes, belts, hoses, rods, and granules.

In the automotive field, the formed bodies obtained from the resin composition of the present invention are used, for example, as automotive interior and exterior parts, for example, car audio panels and instrument panels, dashboards, airbag covers, bumper parts, body panels, weather strips, grommets, glass run channels, rack and pinion boots, suspension boots, constant velocity joint boots, side moldings, mat guards, emblems, leather seats, floor mats, armrests, steering wheel covers, belt line moldings, flush mounts, and gears, knobs, and therefore functions, designs and designability can be imparted that have never been adopted before, taking advantage of flexibility and transparency of the formed bodies of the present invention.

In the electrical/electronic field, the formed bodies obtained from the resin composition of the present invention have excellent heat resistance as covers for electronic devices, and therefore, it is possible to inhibit, for example, smartphone covers from deforming, accompanying heat generation of smartphone terminals, and designs and designability can also be imparted because of their excellent transparency and flexibility, and they facilitate installing and removing.

As other applications, the formed bodies obtained from the resin composition of the present invention can be suitably applied for various covers, various terminal boards, printed wiring boards; viewfinders, filters, prisms, Fresnel lenses (for example, used for speakers, microscopes, binoculars, cameras, clocks, VTRs, and projection TVs); various optical disc (for example, VD, CD, DVD, MD, or LD) substrate protection films, optical switches, optical connectors, liquid crystal displays, light guide films/sheets for liquid crystal displays, flat panel displays, light guide films/sheets for flat panel displays, plasma displays, light guide films/sheets for plasma displays, retardation films/sheets, polarizing films/sheets, polarizing plate protective films/sheets, wave plates, light diffusion films/sheets, prism films/sheets, reflective films/sheets, antireflective films/sheets, viewing angle expansion films/sheets, antiglare films/sheets, luminance enhancement films/sheets, display element substrates for liquid crystal and electroluminescent applications, touch panels, light guide films/sheets for touch panels, and spacers between various front panels and various modules.

Furthermore, the formed bodies obtained from the resin composition of the present invention can be used for various liquid crystal display elements, electroluminescent display elements, or touch panels, for example, such as mobile phones, digital information terminals, pagers, navigation systems, in-vehicle liquid crystal displays, liquid crystal monitors, light control panels, displays for OA equipment, and displays for AV equipment.

Moreover, in terms of the formed bodies obtained from the resin composition of the present invention having excellent heat resistance and flexibility, they are suitably applicable, for example, as interior and exterior construction materials, for curtain walls, roofing members, roofing materials, window members, gutters, exteriors, wall materials, floor materials, molding materials, coated steel sheets, coated plywood, and sealing gaskets for doors and window frames, for example.

The formed bodies obtained from the resin composition of the present invention can also be applicable to, for example, road construction materials, retroreflective films and sheets, light shielding films and sheets, heat shielding films and sheets, agricultural films and sheets, lighting covers, signboards, and translucent sound insulation walls.

Furthermore, the formed bodies obtained from the resin composition of the present invention can be effectively used for a wide range of applications, such as various anti-vibration rubbers such as anti-vibration rubber, mats, seats, cushions, dampers, pads, and mount rubber, and damping materials; materials for footwear such as sports shoes and fashion sandals; components for home appliances such as TVs, stereos, vacuum cleaners, and refrigerators; grips for scissors, screwdrivers, toothbrushes, pens, cameras, and ski poles; office machine parts, such as copier feed rollers and take-up rollers; furniture, such as sofas and chair seats; parts such as switch covers, casters, stoppers, feet rubber and earphones; sporting goods such as swimming goggles, snorkels, ski boots, snowboard boots, ski board and snowboard skin materials, and golf ball covers; industrial materials, such as conveyor belts, electric belts, and pelletizer rolls; elastic members for sanitary materials, such as paper diapers, hap materials, and bandages; band applications, such as hair bands, wrist bands, watch bands, and eyeglass bands; food packaging materials, such as food wrap films; medical devices such as infusion bags, syringes, catheters, and rolling tubes; stoppers for containers storing, for example, foods, beverages, and medicines; snow chains, wire covering materials, trays, films, sheets, stationery, toys, and miscellaneous daily necessities.

A laminate that is one type of formed bodies of the present invention, can be used for various applications. Examples thereof include, for example, those for surface protection, masking, packaging, office use, labels, decoration/display, bookbinding, dicing tapes, medical/hygiene, laminated glass, glass shatterproof, electrical insulation, holding and fixing of electronic devices, semiconductor manufacturing, optical display films, adhesive type optical films, and include adhesive tapes and adhesive films for shielding electromagnetic waves or for sealing materials for electric and electronic parts. Specific examples thereof will include below.

For surface protection applications, the laminate that is one type of formed bodies of the present invention, can be used for various materials such as metal, plastics, rubber, and wood and specifically, can be used for paint surfaces, upon plastic working or deep drawing of metals, for surface protection of automobile parts and optical members. Examples of the automobile parts include, for example, painted outer panels, wheels, mirrors, windows, lights, and light covers. Examples of the optical members include, for example, various image display devices such as a liquid crystal display, organic EL display, plasma display, and field emission display; optical disc component films such as polarizing films, polarizing plates, retardation plates, light guide plates, diffusion plates, and DVDs; and precision fine-coated surface plates for electronic and optical applications.

The masking applications include, for example, masking upon manufacture of printed circuit boards and flexible printed circuit boards; masking upon plating and soldering in electronic equipment; and masking upon manufacture of vehicles such as automobiles, painting of vehicles and buildings, textile printing, and civil engineering work screening.

Packaging applications include, for example, heavy duty packaging, export packaging, cardboard box sealing, and can sealing. Office uses include those for general office use, sealing, repair of books, drafting, and memos, for example. Label applications include those for price, product display, luggage tags, POP, stickers, stripes, nameplates, decorations, advertisements, and marking films, for example.

Label applications include papers such as paper, processed paper (papers subjected to, for example, aluminum vapor deposition processing, aluminum lamination processing, varnish processing, and resin processing), and synthetic paper; and labels with substrates layers, such as cellophane, plastic materials, cloth, wood, and metallic films. Examples of substrate layers include, for example, high-quality paper, art paper, cast paper, thermal paper, wheel paper, polyethylene terephthalate films, polyvinyl chloride films, OPP films, polylactic acid films, synthetic paper, synthetic paper thermal, and over-laminated film.

Examples of adherends of the aforementioned labels include, for example, plastic products such as plastic bottles and foamed plastic cases; paper and cardboard products such as cardboard boxes; glass products such as glass bottles; metal products; and other inorganic material products such as ceramics.

Examples of the decoration and display applications include, for example, danger indication stickers, line tapes, wiring markings, phosphorescent tapes, and reflective sheets.

The adhesive type optical film applications include, for example, polarizing films, polarizing plates, retardation films, viewing angle expansion films, luminance enhancement films, anti-reflection films, anti-glare films, color filters, light guide plates, diffusion films, prism sheets, electromagnetic wave shielding films, near-infrared absorbing films, functional composite optical films, films for laminating ITO, films for imparting impact resistance, and optical films with adhesive layers formed at least partially or entirely on one or both sides of visibility-enhancing films. Such adhesive type optical films also include protective films used for surface protection of the aforementioned optical films. The adhesive type optical films are suitable for various image display devices such as liquid crystal display devices, PDPs, organic EL display devices, electronic paper, game consoles, and mobile terminals.

The electrical insulation applications include, for example, protective coating or insulation of coils and interlaminar insulation such as motors and transformers. Electronic device holding and fixing applications include, for example, carrier tapes, packaging, fixing of cathode ray tubes, splicing and rib reinforcement. The semiconductor manufacturing applications include, for example, protection of silicone wafers.

The medical/hygienic applications include, for example, transdermal absorption agent applications, such as analgesics and anti-inflammatory analgesic (plasters, cataplasms), patches for cold preparation, antipruritic patches, and keratin softeners; various tape applications, such as first-aid adhesive bandages (with disinfectants), surgical dressings and surgical tapes, adhesive bandages, hemostatic tapes, tapes for human waste disposal fittings (artificial anus fixing tape), suture tapes, antibacterial tapes, fixation taping, self-adhesive bandages, oral mucous membrane adhesive tapes, sports tapes, and depilatory tapes; beauty applications such as face packs, eye moisture sheets, and exfoliating packs; binding applications for sanitary materials, such as diapers and pet sheets; cooling sheets, warmers, dust proof, water proof, and insect trapping.

Applications for encapsulants for the electronic and electrical components include, for example, liquid crystal displays, organic EL displays, organic EL lighting, and solar cells.

For the laminated glass applications, the laminate that is one type of formed bodies of the present invention is effectively utilized, for example, for automotive windshields, automotive side glasses, automotive sunroofs, automotive rear glasses, and head-up display glass.

[Example]

The present invention will be specifically described by way of Examples below, however, the present invention is in no way limited to these Examples. Note that the physical properties in Examples and Comparative Examples were measured or evaluated by the following methods.

[Weight-average molecular weight (Mw), number-average molecular weight (Mn), and molecular weight distribution (Mw/Mn)]

A weight-average molecular weight and number-average molecular weight of acrylic block copolymers were determined by gel permeation chromatography (hereinafter abbreviated as GPC) in terms of polystyrene molecular weights, and a molecular weight distribution was calculated from these values. Details of the conditions for measurement of molecular weights are as follows.

- Apparatus: GPC apparatus "HLC-8020" manufactured by Tosoh Corporation
- Separation column: Two "TSK-gel SuperMultipore HZ M" columns manufactured by Tosoh Corporation connected in series.
- Eluent: Tetrahydrofuran
- Eluent flow rate: 0.36 ml/min
- Column temperature: 40°C
- Detection method: Differential refractive index (RI)

[Proportion of composition of each polymer block]

It was determined by $^1$H-NMR measurement.

- Apparatus: Nuclear magnetic resonance apparatus "JNM-LA400" manufactured by JEOL Ltd.

Heavy solvent: Deuterated chloroform

In a $^1$H-NMR spectrum, signals in the vicinity of 3.6 ppm, 3.7 ppm and 4.0 ppm are assigned to hydrogen atoms (-O-C$\underline{H}_3$) bonded to a carbon atom adjacent to an oxygen atom contained in an ester group of a methyl methacrylate unit, hydrogen atoms (-O-C$\underline{H}_3$) bonded to a carbon atom adjacent to an oxygen atom contained in an ester group of a methyl acrylate unit, and hydrogen atoms (-O-C$\underline{H}_2$-CH$_2$-CH$_2$-CH$_3$) bonded to a carbon atom adjacent to an oxygen atom contained in an ester group of a n-butyl acrylate unit and hydrogen atoms (-O-C$\underline{H}_2$-CH(-CH$_2$-CH$_3$)-CH$_2$-CH$_2$-CH$_2$-CH$_3$) bonded to a carbon atom adjacent to an oxygen atom contained in an ester group of a 2-ethylhexyl acrylate unit, and a molar ratio of each monomer unit is determined from the ratio of these integrated values, and this ratio is converted to a mass ratio based on the molecular weight of the monomer unit to determine the content of each polymer block, and a mass proportion of methyl methacrylate units contained in an acrylic block copolymer was defined as (H), and a mass proportion of acrylic ester units was defined as (J).

[Calculation of solubility parameters SP(A1) and SP(B1) of polymer blocks (A1) and (B1)]

The solubility parameters SP(A1) and SP(B1) of polymer blocks (A1) and (B1) were calculated by the Fedors' estimation method. Note that as values of the methyl acrylate unit, n-butyl acrylate unit, and 2-ethylhexyl acrylate unit, which were contained in each polymer block, those described above were used as they were. Details of the case where each polymer block is a polymer block composed of a plurality of monomer units will be described below with aspects of Examples.

For calculation of solubility parameters of the polymer blocks, solubility parameters of homopolymers, corresponding to the monomer units contained in the polymer blocks, were used. The solubility parameters of the following homopolymers are calculated from each ∆E and each V thereof, and the solubility parameters of polymethyl acrylate (methyl acrylate unit), n-butyl polyacrylate (n-butyl acrylate unit), 2-ethylhexyl polyacrylate (2-ethylhexyl acrylate unit) and polymethyl methacrylate (methyl methacrylate unit), are determined to be 11.30 (cal/cm$^3$)$^{1/2}$, 10.20 (cal/cm$^3$)$^{1/2}$, 9.50 (cal/cm$^3$)$^{1/2}$, and 10.50 (cal/cm$^3$)$^{1/2}$, respectively. Further, the solubility parameter SP(C) of oleic acid is 9.14 (cal/cm$^3$)$^{1/2}$.

In a case in which the polymer block (A1) (or polymer block (B1)) was a copolymer composed of a plurality of monomer units, the following formula was used for calculation. SP (X) = $[\Sigma[\varphi i \times [SP (X)i]^2]]^{1/2}$ wherein in the formula, SP (X) represents the solubility parameter of the polymer block (X), $\varphi i$ is the volume fraction of the monomer unit (i) in the polymer block (X), and SP (X)i is the solubility parameter obtained by the Fedors' estimation method for a homopolymer composed of the monomer unit (i). The volume fraction was equal to the mass fraction of each monomer unit constituting the polymer block.

The acrylic block copolymer (I-1) used in Example 1 has the content of 29% by mass of the polymer block (A1), and the monomer unit constituting the polymer block (B1) is n-butyl acrylate: methyl acrylate = 80:20 (mass ratio). By using this and the solubility parameter calculated by the aforementioned Fedors' estimation method, an index value of the solubility parameter of the acrylic block copolymer (I-1) used in Example 1 was determined to be 10.46 $(cal/cm^3)^{1/2}$.

[Oleic acid immersion test]

Each press sheet fabricated in Examples and Comparative Examples was punched into a 25 mm diameter disk, which was used as a test piece. First, the mass of the aforementioned test piece was measured, and the measured value was used as the mass before immersion ($W_1$). Next, the test piece was immersed in oleic acid at 25°C for 168 hours, and then was taken out, and oleic acid adhering to a surface of the test piece was wiped off. The mass of test piece was measured and the measured value was used as the mass after the immersion test ($W_2$). From the aforementioned $W_1$ and $W_2$, the rate of change in mass $(W_2-W_1)/W_1$ by the immersion test was determined as a percentage.

[Hardness]

Each press sheet fabricated in Examples and Comparative Examples was cut into 50 mm in length and 50 mm in width, and the hardness of a 6 mm thick sheet obtained by stacking six sheets of the aforementioned sheets was measured in accordance with JIS 6253-3: 2021, by using an indenter of a Type A durometer.

[Synthesis Example 1] <Acrylic block copolymer (I-1)>

(1) A 2L three-necked flask was attached with a three-way stopcock followed by substitution of an inside of the flask with nitrogen, then added with 1154 g of toluene and 24.9 g of 1,2-dimethoxyethane under stirring at room temperature, and subsequently added with 37.8 g of a toluene solution containing 19.0 mmol of isobutylbis(2,6-di-butyl-4-methylphenoxy) aluminum, followed by addition of 1.89 g of a cyclohexane solution of sec-butyl lithium containing 3.22 mol of sec-butyl lithium.
(2) Thereto was then added 22.9 g of methyl methacrylate. The reaction solution was initially yellow in color, but became colorless after stirring at room temperature for 60 minutes.
(3) Subsequently, the internal temperature of the polymerization solution was cooled to -30°C, and 150 g of a mixture of methyl acrylate and n-butyl acrylate (mass ratio 20/80) was added dropwise over 2 hours, and after the completion of dropwise addition, the mixture was stirred at - 30°C for 5 minutes.
(4) Further, thereto was added 38.2 g of methyl methacrylate, and the mixture was stirred at room temperature overnight.
(5) After completion of the polymerization reaction with addition of 12.2 g of methanol, the resulting reaction solution was poured into 15 kg of methanol to precipitate a white precipitate. Thereafter the white precipitate was collected and dried to obtain 200 g of an acrylic block copolymer (I-1).

[Synthesis Example 2] <Acrylic block copolymer (II-1)>

(1) A 2L three-necked flask was attached with a three-way stopcock followed by substitution of an inside of the flask with nitrogen, then added with 936 g of toluene and 51.4 g of 1,2-dimethoxyethane under stirring at room temperature, and subsequently added with 32.9 g of a toluene solution containing 16.5 mmol of isobutylbis(2,6-di-butyl-4-methylphenoxy) aluminum, followed by addition of 3.88 g of a cyclohexane solution of sec-butyl lithium containing 6.62 mol of sec-butyl lithium.
(2) Thereto was then added 52.9 g of methyl methacrylate. The reaction solution was initially yellow in color, but became colorless after stirring at room temperature for 60 minutes.
(3) Subsequently, the internal temperature of the polymerization solution was cooled to -30°C, and 226 g of n-butyl acrylate was added dropwise over 2 hours, and after the completion of dropwise addition, the mixture was stirred at - 30°C for 5 minutes.

(4) Further, thereto was added 46.2 g of methyl methacrylate, and the mixture was stirred at room temperature overnight.

(5) After completion of the polymerization reaction with addition of 13.7 g of methanol, the resulting reaction solution was poured into 15 kg of methanol to precipitate a white precipitate. Thereafter the white precipitate was collected and dried to obtain 300 g of an acrylic block copolymer (II-1).

[Synthesis Example 3] <Acrylic block copolymer (II-2)>

(1) A 2L three-necked flask was attached with a three-way stopcock, followed by substitution of an inside of the flask with nitrogen, then added with 1120 g of toluene and 1.96 g of 1,2-dimethoxyethane under stirring at room temperature, and subsequently added with 16.9 g of a toluene solution containing 9.3 mmol of isobutylbis(2,6-di-butyl-4-methylphenoxy) aluminum, followed by addition of 2.37 g of a cyclohexane solution of sec-butyl lithium containing 4.6 mol of sec-butyl lithium.

(2) Thereto was then added 24.2 g of methyl methacrylate. The reaction solution was initially yellow in color, but became colorless after stirring at room temperature for 60 minutes.

(3) Subsequently, the internal temperature of the polymerization solution was cooled to -30°C, and 152 g of n-butyl acrylate was added dropwise over 2 hours, and after the completion of dropwise addition, the mixture was stirred at - 30°C for 5 minutes.

(4) Further, thereto was added 24.2 g of methyl methacrylate, and the mixture was stirred at room temperature overnight.

(5) After completion of the polymerization reaction with addition of 8.3 g of methanol, the resulting reaction solution was poured into 15 kg of methanol to precipitate a white precipitate. Thereafter the white precipitate was collected and dried to obtain 200 g of an acrylic block copolymer (II-2).

[Synthesis Example 4] <Acrylic block copolymer (II-3)>

(1) A 2L three-necked flask was attached with a three-way stopcock, followed by substitution of an inside of the flask with nitrogen, then added with 938 g of toluene and 20.2 g of 1,2-dimethoxyethane under stirring at room temperature, and subsequently added with 41.4 g of a toluene solution containing 20.8 mmol of isobutylbis(2,6-di-butyl-4-methylphenoxy) aluminum, followed by addition of 1.53 g of a cyclohexane solution of sec-butyl lithium containing 2.60 mol of sec-butyl lithium.

(2) Thereto was then added 21.8 g of methyl methacrylate. The reaction solution was initially yellow in color, but became colorless after stirring at room temperature for 60 minutes.

(3) Subsequently, the internal temperature of the polymerization solution was cooled to -30°C, and 215 g of a mixture of 2-ethylhexyl acrylate and n-butyl acrylate (mass ratio 50/50) was added dropwise over 2 hours, and after the completion of dropwise addition, the mixture was stirred at - 30°C for 5 minutes.

(4) Further, thereto was added 29.4 g of methyl methacrylate, and the mixture was stirred at room temperature overnight, and then after completion of the polymerization reaction with addition of 12.2 g of methanol, the resulting reaction solution was poured into 15 kg of methanol to precipitate a white precipitate. Thereafter the white precipitate was collected and dried to obtain 280 g of an acrylic block copolymer (II-3).

[Synthesis Example 5] <Acrylic block copolymer (II-4)>

(1) A 2L three-necked flask was attached with a three-way stopcock followed by substitution of an inside of the flask with nitrogen, then added with 990 g of toluene and 11.2 g of 1,2-dimethoxyethane under stirring at room temperature, and subsequently added with 31.1 g of a toluene solution containing 15.6 mmol of isobutylbis(2,6-di-butyl-4-methylphenoxy) aluminum, followed by addition of 0.82 g of a cyclohexane solution of sec-butyl lithium containing 1.39 mol of sec-butyl lithium.

(2) Thereto was then added 11.0 g of methyl methacrylate. The reaction solution was initially yellow in color, but became colorless after stirring at room temperature for 60 minutes.

(3) Subsequently, the internal temperature of the polymerization solution was cooled to -30°C, and 157 g of 2-ethylhexyl acrylate was added dropwise over 2 hours, and after the completion of dropwise addition, the mixture was stirred at -30°C for 5 minutes.

(4) Further, thereto was added 12.4 g of methyl methacrylate, and the mixture was stirred at room temperature overnight.

(5) After completion of the polymerization reaction with addition of 17.3 g of methanol, the resulting reaction solution was poured into 15 kg of methanol to precipitate a white precipitate. Thereafter the white precipitate was collected and dried to obtain 180 g of an acrylic block copolymer (II-4).

[Synthesis Example 6] <Acrylic block copolymer (II'-1)>

(1) A 2L three-necked flask was attached with a three-way stopcock, followed by substitution of an inside of the flask with nitrogen, then added with 936 g of toluene and 51.4 g of 1,2-dimethoxyethane under stirring at room temperature, and subsequently added with 32.9 g of a toluene solution containing 16.5 mmol of isobutylbis(2,6-di-butyl-4-methylphenoxy) aluminum, followed by addition of 4.10 g of a cyclohexane solution of sec-butyl lithium containing 7.00 mmol of sec-butyl lithium.

(2) Thereto was then added 65.0 g of methyl methacrylate. The reaction solution was initially yellow in color, but became colorless after stirring at room temperature for 60 minutes.

(3) Subsequently, the internal temperature of the polymerization solution was cooled to -30°C, and 226 g of n-butyl acrylate was added dropwise over 2 hours, and after the completion of dropwise addition, the mixture was stirred at - 30°C for 5 minutes.

(4) Further, thereto was added 161 g of methyl methacrylate, and the mixture was stirred at room temperature overnight.

(5) After completion of the polymerization reaction with addition of 13.7 g of methanol, the resulting reaction solution was poured into 15 kg of methanol to precipitate a white precipitate. Thereafter the white precipitate was collected and dried to obtain 430 g of an acrylic block copolymer (II'-1).

The structure, weight-average molecular weight (Mw), molecular weight distribution (Mw/Mn), SP (A)-SP (B), (H) × SP (A) + (J) × SP (B), and the rate of change in mass by the oleic acid immersion test, of each of acrylic block copolymers (I-1), (II-1) to (II-4), and (II'-1) obtained in the aforementioned Synthesis Examples 1 to 6, are shown in Table 1. Note that the SP (A) represents the solubility parameter of the polymer block (A1) or the polymer block (A2), and the SP (B) represents the solubility parameter of the polymer block (B1) or the polymer block (B2).

[Table 1]

| | Synthesis Example 1 | Synthesis Example 2 | Synthesis Example 3 | Synthesis Example 4 | Synthesis Example 5 | Synthesis Example 6 |
|---|---|---|---|---|---|---|
| Acrylic block copolymer | I-1 | II-1 | II-2 | II-3 | II-4 | II'-1 |
| Block structure | (A1)-(B1)-(A1) | (A2)-(B2)-(A2) | (A2)-(B2)-(A2) | (A2)-(B2)-(A2) | (A2)-(B2)-(A2) | (A2)-(B2)-(A2) |
| Mw | 82,000 | 60,000 | 81,000 | 70,000 | 200,000 | 62,000 |
| Mw/Mn | 1.1 | 1.1 | 1.1 | 1.1 | 1.1 | 1.1 |
| % by mass of polymer block (A1) or (A2) (($H$) × 100 or ($J$) × 100) | 29 | 31 | 24 | 20 | 13 | 50 |
| Acrylic ester unit | nBA/MA=80/ 20 | nBA=100% | nBA=100% | 2EHA/nBA= 50/50 | 2EHA=100% | nBA=100% |
| SP(A)-SP(B) | 0.22 | 0.43 | 0.43 | 0.62 | 1.04 | 0.43 |
| ($H$)×SP(A)+($J$)×SP(B)-SP(C) | 1.32 | 1.17 | 1.15 | 0.57 | 0.50 | 1.24 |
| Rate of change in mass in immersion test [%] | 46.0 | 159 | 210 | 550 | 466 | 40.0 |
| MA: Methyl acrylate, nBA: n-Butyl acrylate, 2EHA: 2-Ethylehexyl acrylate | | | | | | |

<<Examples 1 to 7>>

Each mixture in which the acrylic block copolymer (I-1) and the acrylic block copolymer (II-1), (II-2), (II-3) or (II-4) were preliminarily dry-blended in each proportion listed in Table 2 was fabricated, and the mixture was then melt-kneaded by using a twin-screw extruder ("ZSK-25" manufactured by KRUPP WERNER & PFLEIDERER). The resulting melt-kneaded material was extruded from the twin-screw extruder and pelletized by a strand-cutting method. The resulting pellets were subjected to hot press molding at 200°C to fabricate a press sheet (formed body) of 150 mm × 150 mm × 1 mm in thickness. The obtained press sheet was evaluated for the aforementioned oleic acid immersion test, and the hardness of the sheet was measured. The results are shown in Table 2.

<<Comparative Examples 1 and 2>>

Each mixture in which the acrylic block copolymer (I-1) and the acrylic block copolymer (II-4) or (II'-1) were preliminarily dry-blended in each proportion listed in Table 2 was fabricated, and the mixture was then melt-kneaded by using a twin-screw extruder ("ZSK-25" manufactured by KRUPP WERNER & PFLEIDERER). The resulting melt-kneaded material was extruded from the twin-screw extruder and pelletized by a strand-cutting method. The resulting pellets were subjected to hot press molding at 200°C to fabricate a press sheet (formed body) of 150 mm × 150 mm × 1 mm in thickness. The obtained press sheet was evaluated for the aforementioned oleic acid immersion test, and the hardness of the sheet was measured. The results are shown in Table 2.

[Table 2]

| | | Example 1 | Example 2 | Example 3 | Example 4 | Example 5 |
|---|---|---|---|---|---|---|
| I-1 | Parts by mass | 100 | 100 | 100 | 100 | 100 |
| II-1 | | 100 | | | | |
| II-2 | | | 100 | | | |
| II-3 | | | | 100 | | |
| II-4 | | | | | 100 | 400 |
| II'-1 | | | | | | |
| Rate of change in mass in immersion test [%] | | 137 | 171 | 153 | 159 | 184 |
| Hardness (type A) | | 52 | 38 | 33 | 26 | 8.0 |

Table 2 (continued)

| | | Example 6 | Example 7 | Comparative Example 1 | Comparative Example 2 |
|---|---|---|---|---|---|
| I-1 | Parts by mass | 100 | 100 | 100 | 100 |
| II-1 | | | | | |
| II-2 | | | | | |
| II-3 | | | | | |
| II-4 | | 20 | 15 | 500 | |
| II'-1 | | | | | 100 |
| Rate of change in mass in immersion test [%] | | 90.0 | 60.0 | 210 | 60 |
| Hardness (type A) | | 40 | 45 | 7.0 | 81 |

Table 2 shows that the rates of change in mass by the oleic acid immersion test were small in Examples 1 to 7 that satisfy the requirements of the present invention. Moreover, the formed bodies obtained in Examples 1 to 7 had low hardness and maintained flexibility.

In Comparative Example 1, on the contrary, the composition in which 500 parts by mass of the acrylic block copolymer (II-4) were added to the acrylic block copolymer (I-1) and a formed body of the composition were examined. The obtained formed body maintained its flexibility, however, it failed to retain its shape due to a large rate of change in mass by the oleic acid immersion test.

Moreover, in Comparative Example 2, the composition in which 100 parts by mass of the acrylic block copolymer (II'-1) with the high content of polymer block (A2) were added to the acrylic block copolymer (I-1) and a formed body of the composition were examined. The obtained formed body exhibited favorable results on the rate of change in mass by the oleic acid immersion test, however, it failed to maintain the flexibility.

**Claims**

1. A resin composition comprising

   100 parts by mass of an acrylic block copolymer (I) having at least one polymer block (A1) comprising a methacrylic ester unit and at least one polymer block (B1) comprising an acrylic ester unit, and
   15 to 400 parts by mass of an acrylic block copolymer (II) having at least one polymer block (A2) comprising a methyl methacrylate unit and at least one polymer block (B2) comprising an acrylic ester unit,
   wherein the content of the polymer block (A1) in the acrylic block copolymer (I) is 20% by mass or more,
   the polymer block (B1) of the acrylic block copolymer (I) comprises a unit of an acrylic ester (b1-1) represented by the general formula $CH_2=CH-COOR^1$ (1), wherein $R^1$ represents an organic group having 1 to 3 carbon atoms, and
   the acrylic block copolymer (I) satisfies the following formulae (i) and (ii):

   (i) $(H) \times SP(A1) + (J) \times SP(B1) - SP(C) > 1.20$
   (ii) $-0.80 \leq SP(A1) - SP(B1) \leq 0.43$

   wherein SP (A1) represents a solubility parameter $(cal/cm^3)^{1/2}$ of the polymer block (A1), SP (B1) represents a solubility parameter $(cal/cm^3)^{1/2}$ of the polymer block (BI), SP (C) represents a solubility parameter $(cal/cm^3)^{1/2}$ of oleic acid, (H) represents a mass proportion of the polymer block (A1) in the acrylic block copolymer (I), and
   (J) represents a mass proportion of the polymer block (B1) in the acrylic block copolymer (I),
   the polymer block (B2) of the acrylic block copolymer (II) comprises a unit of an acrylic ester (b2-2) represented by the general formula $CH_2=CH-COOR^2$ (2), wherein $R^2$ represents an organic group having 4 to 12 carbon atoms, and
   the content of the polymer block (A2) in the acrylic block copolymer (II) is less than 35% by mass.

2. The resin composition according to claim 1, wherein weight-average molecular weights of the acrylic block copolymers (I) and (II) are both in a range of 30,000 to 300,000.

3. The resin composition according to claim 1 or 2, wherein, when a cylindrical test piece with a thickness of 1 mm and a diameter of 25 mm obtained by forming the resin composition is immersed in oleic acid and stored at 25°C for 168 hours, a rate of change in mass upon storage, [(mass of test piece after immersion) - (mass of test piece before immersion)]/(mass of test piece before immersion) $\times$ 100, is 200% or less.

4. The resin composition according to any one of claims 1 to 3, wherein the acrylic ester (b2-2) unit in the acrylic block copolymer (II) is a n-butyl acrylate unit.

5. The resin composition according to any one of claims 1 to 4, wherein the acrylic ester (b1-1) unit in the acrylic block copolymer (I) is a methyl acrylate unit.

<div align="center">

**INTERNATIONAL SEARCH REPORT**

</div>

| | International application No. |
|---|---|
| | **PCT/JP2022/012831** |

**A.    CLASSIFICATION OF SUBJECT MATTER**

*C08F 297/02*(2006.01)i; *C08L 53/00*(2006.01)i
FI:    C08L53/00; C08F297/02

According to International Patent Classification (IPC) or to both national classification and IPC

**B.    FIELDS SEARCHED**

Minimum documentation searched (classification system followed by classification symbols)

C08F297/02; C08L53/00

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

CAplus/REGISTRY (STN)

**C.    DOCUMENTS CONSIDERED TO BE RELEVANT**

| Category* | Citation of document, with indication, where appropriate, of the relevant passages | Relevant to claim No. |
|---|---|---|
| X | WO 2020/138238 A1 (KURARAY CO) 02 July 2020 (2020-07-02)<br>claims, paragraph [0064], examples | 1-5 |
| A | JP 2020-147618 A (KURARAY CO) 17 September 2020 (2020-09-17)<br>entire text | 1-5 |
| A | JP 2020-055107 A (KURARAY CO) 09 April 2020 (2020-04-09)<br>entire text | 1-5 |
| A | JP 2019-094402 A (KURARAY CO) 20 June 2019 (2019-06-20)<br>entire text | 1-5 |
| A | WO 2020/075655 A1 (KURARAY CO) 16 April 2020 (2020-04-16)<br>entire text | 1-5 |
| A | JP 2017-214595 A (KURARAY CO) 07 December 2017 (2017-12-07)<br>entire text | 1-5 |
| A | JP 2017-214596 A (KURARAY CO) 07 December 2017 (2017-12-07)<br>entire text | 1-5 |

☑ Further documents are listed in the continuation of Box C.        ☑ See patent family annex.

| \*    Special categories of cited documents: | "T"    later document published after the international filing date or priority date and not in conflict with the application but cited to understand the principle or theory underlying the invention |
|---|---|
| "A"    document defining the general state of the art which is not considered to be of particular relevance | |
| "E"    earlier application or patent but published on or after the international filing date | "X"    document of particular relevance; the claimed invention cannot be considered novel or cannot be considered to involve an inventive step when the document is taken alone |
| "L"    document which may throw doubts on priority claim(s) or which is cited to establish the publication date of another citation or other special reason (as specified) | "Y"    document of particular relevance; the claimed invention cannot be considered to involve an inventive step when the document is combined with one or more other such documents, such combination being obvious to a person skilled in the art |
| "O"    document referring to an oral disclosure, use, exhibition or other means | |
| "P"    document published prior to the international filing date but later than the priority date claimed | "&"    document member of the same patent family |

| Date of the actual completion of the international search | Date of mailing of the international search report |
|---|---|
| **19 May 2022** | **31 May 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**

| International application No. |
|---|
| **PCT/JP2022/012831** |

**C.    DOCUMENTS CONSIDERED TO BE RELEVANT**

| Category* | Citation of document, with indication, where appropriate, of the relevant passages | Relevant to claim No. |
|---|---|---|
| A | JP 2017-214597 A (KURARAY CO) 07 December 2017 (2017-12-07)<br>    entire text | 1-5 |
| A | JP 2017-214598 A (KURARAY CO) 07 December 2017 (2017-12-07)<br>    entire text | 1-5 |
| A | JP 2017-218599 A (KURARAY CO) 14 December 2017 (2017-12-14)<br>    entire text | 1-5 |
| A | WO 2018/143211 A1 (KURARAY CO) 09 August 2018 (2018-08-09)<br>    entire text | 1-5 |
| P, X | JP 2021-120452 A (KURARAY CO) 19 August 2021 (2021-08-19)<br>    claims, paragraph [0008], examples | 1-5 |

Form PCT/ISA/210 (second sheet) (January 2015)

**INTERNATIONAL SEARCH REPORT**
Information on patent family members

International application No.

**PCT/JP2022/012831**

| Patent document cited in search report | | | Publication date (day/month/year) | Patent family member(s) | | | Publication date (day/month/year) |
|---|---|---|---|---|---|---|---|
| WO | 2020/138238 | A1 | 02 July 2020 | KR 10-2021-0106429 | A | | |
| | | | | TW 202100696 | A | | |
| JP | 2020-147618 | A | 17 September 2020 | (Family: none) | | | |
| JP | 2020-055107 | A | 09 April 2020 | (Family: none) | | | |
| JP | 2019-094402 | A | 20 June 2019 | (Family: none) | | | |
| WO | 2020/075655 | A1 | 16 April 2020 | US 2021/0347931 entire text | A1 | | |
| | | | | CN 112805331 | A | | |
| | | | | KR 10-2021-0071991 | A | | |
| JP | 2017-214595 | A | 07 December 2017 | (Family: none) | | | |
| JP | 2017-214596 | A | 07 December 2017 | (Family: none) | | | |
| JP | 2017-214597 | A | 07 December 2017 | (Family: none) | | | |
| JP | 2017-214598 | A | 07 December 2017 | (Family: none) | | | |
| JP | 2017-218599 | A | 14 December 2017 | (Family: none) | | | |
| WO | 2018/143211 | A1 | 09 August 2018 | TW 201840407 | A | | |
| JP | 2021-120452 | A | 19 August 2021 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2016175119 A

- JP H11335432 A

**Non-patent literature cited in the description**

- *Macromol. Chem. Phys.,* 2000, vol. 201, 1108-1114